# FASCICULE DE BREVET EUROPEEN

(11) **EP 3 634 301 B1**
(45) Date de publication et mention de la délivrance du brevet: **10.11.2021**
(21) Numéro de dépôt: 18737660.3
(22) Date de dépôt: 06.06.2018
(51) Int. Cl.: A61C 17/34, A61C 17/22

(54) **TETE DE BROSSAGE POUR BROSSE A DENTS ELECTRIQUE, ET BROSSE A DENTS ELECTRIQUE ASSOCIEE**
BÜRSTENKOPF FÜR EINE ELEKTRISCHE ZAHNBÜRSTE UND ZUGEHÖRIGE ELEKTRISCHE ZAHNBÜRSTE
BRUSH HEAD FOR AN ELECTRIC TOOTHBRUSH, AND ASSOCIATED ELECTRIC TOOTHBRUSH

(30) Priorité: 08.06.2017 FR 1755101
(43) Date de publication de la demande: 15.04.2020
(73) Titulaire: Castaldo, Yann, 13100 Aix En Provence (FR)
(72) Inventeur: Castaldo, Yann, 13100 Aix En Provence (FR)
(74) Mandataire: Germain Maureau
(86) Numéro de dépôt international: PCT/FR2018/051303
(87) Numéro de publication internationale: WO 2018/224772

(56) Documents cités:
- CN-Y- 2 702 717
- GB-A- 1 331 646
- US-A1- 2011 191 971

## Description

La présente invention se rapporte à une tête de brossage pour brosse à dents électrique, ainsi qu'à une brosse à dents électrique équipée d'une telle tête de brossage.

Elle se rapporte plus particulièrement à une tête de brossage adaptée pour le brossage conjoint - ou simultané - des dents supérieures et inférieures, et en particulier pour le brossage conjoint des faces internes, externes et occlusales des dents à la fois supérieures et inférieures.

Dans le domaine des brosses à dents, et en particulier des brosses à dents électriques, il est classique d'employer des têtes de brossage comprenant soit une brosse animée d'un mouvement rotatif, soit une brosse animée d'un mouvement de vibration ou de va-et-vient.

Cependant, avec de telles brosses, il est recommandé un brossage de plusieurs minutes pour qu'il soit complet et efficace, ce qui rend cette opération trop longue et fastidieuse au goût de nombreuses personnes qui, de ce fait, expédient le brossage en un temps réduit trop court pour être efficace.

Pour répondre à cette problématique, il est notamment connu du document GB 1 331 646 une brosse à dents permettant de brosser simultanément les dents supérieures et inférieures, avec un support rotatif comprenant deux disques tournant supportant des éléments de brosse. Une telle brosse rotative s'avère cependant inefficace pour un passage des poils de brosses entre les dents.

Il est également connu du document FR 2 849 591 A1 d'employer une brosse à dents comprenant un bloc en forme générale de protège-dents, réalisé dans un matériau thermo-formable pour l'adapter à la morphologie de l'utilisateur après l'avoir exposé à une température adéquate. Ce bloc est pourvu de deux faces opposées dans chacune desquelles est prévue une gorge arquée garnie intérieurement de brosses. Une telle brosse est cependant peu pratique d'utilisation du fait de devoir préchauffer le bloc pour l'assujettir à la forme arquée des dents arcades dentaires supérieure et inférieure et, en outre, à cause du volume du bloc qui enveloppe quasi intégralement les arcades dentaires supérieure et inférieure. En outre, quand les brosses sont usées, il est nécessaire de remplacer au moins le bloc au complet, ce qui est rédhibitoire en termes de coût pour les utilisateurs.

L'état de la technique peut également être illustré par l'enseignement du document US 2001/0191971 qui se rapport à une brosse à dents manuelle comprenant une tête de brossage montée pivotante sur un manche et permettant de brosser simultanément les dents supérieures et inférieures, cette tête de brossage étant munie d'un support en « H » définissant une gorge inférieure et une gorge supérieure et qui supporte, d'une part et à l'intérieur de la gorge supérieure, des éléments de brosses latéraux supérieurs en vis-à-vis et des éléments de brosses transversaux supérieurs et, d'autre part et à l'intérieur de la gorge inférieure, des éléments de brosses latéraux inférieurs disposés en vis-à-vis et des éléments de brosses transversaux inférieurs. Une telle brosse à dents manuelle offre cependant une qualité de brossage réduite.

La présente invention a pour but de résoudre les inconvénients précités, en proposant une tête de brossage pour brosse à dents électrique, qui permettent de brosser simultanément les dents supérieures et inférieures, tout en étant simple de conception, adaptée à de nombreuses morphologies de dentition, de coût réduit à la fabrication et de dimensions également réduites.

Un autre but de l'invention est de proposer une tête de brossage qui permet un brossage conjoint des faces internes, externes et occlusales des dents à la fois supérieures et inférieures, pour un brossage rapide et efficace.

Un autre but de l'invention est de proposer une tête de brossage qui soit conformée pour une tenue de la brosse à dents électrique qui soit ergonomique et qui permet un brossage complet sans avoir à ressortir la tête de brossage de la bouche pour atteindre les molaires à droite et à gauche.

Un autre but de l'invention est de proposer une tête de brossage qui permette de remplacer des éléments de brossage sans avoir à tout remplacer.

A cet effet, elle propose une tête de brossage pour brosse à dents électrique selon la revendication 1, et une brosse à dents électrique selon la revendication 14.

Au sens de l'invention, le support est conformé pour autoriser une déformation arquée, c'est-à-dire que le support est apte à se déformer élastiquement pour prendre une conformation arquée, afin de permettre au support d'épouser les arcades dentaires supérieure et inférieure pendant le brossage qui s'effectuera en plaçant l'arcade dentaire supérieure à l'intérieur de la gorge supérieure et l'arcade dentaire inférieure à l'intérieur de la gorge inférieure, et en faisant ensuite glisser le support de gauche à droite et de droite à gauche pour un brossage de l'ensemble des faces des dents inférieures et supérieures. Ainsi, grâce au caractère flexible ou élastiquement déformable du support, il est possible de proposer un support qui soit adapté à de nombreuses morphologies de dentition, car le support est adapté pour se déformer (c'est-à-dire pour s'arquer) afin d'épouser les arcades dentaires supérieure et inférieure pendant le brossage.

En combinaison de ce caractère flexible du support, le positionnement de la pièce mobile et de l'arbre d'entraînement du dispositif oscillatoire vis-à-vis du plan médian du support va permettre une tenue ergonomique de la brosse à dents durant tout le brossage, en partant des incisives centrales puis en allant à droite jusqu'aux molaires de droite (jusqu'à ce que la tête de brossage vienne buter contre la commissure des lèvres à droite) et en revenant à gauche jusqu'aux molaires de gauche (jusqu'à ce que la tête de brossage vienne buter contre la commissure des lèvres à gauche), sans avoir à ressortir le support de la bouche pendant l'intégralité du brossage et juste en faisant coulisser le support sur les arcades dentaires, préalablement refermées sur le support pour former des « rails » pour le support qui coulisse un peu à la manière d'un coulisseau.

De ce fait, le support peut être de dimensions réduites et il suffit de faire coulisser le support le long des arcades dentaires durant le brossage, pour passer des incisives aux molaires de droite, puis de gauche. En d'autres termes, une fois le support mis en bouche, celui-ci ne sort plus de la cavité buccale et le mouvement manuel de brossage se fera comme un déplacement le long d'un rail (ici les deux arcades dentaires refermées sur le support) de gauche à droite et de droite à gauche.

Au début du brossage, l'utilisateur mord dans le support en plaçant l'arcade dentaire supérieure à l'intérieur de la gorge supérieure et en plaçant l'arcade dentaire inférieure à l'intérieur de la gorge inférieure, de sorte que le plan médian du support soit sensiblement confondu avec le plan de symétrie de l'utilisateur (ou plan de symétrie du visage ou des arcades dentaires), et ensuite l'utilisateur fait coulisser le support vers la droite puis vers la gauche (ou inversement) pour atteindre les molaires du fond

En usage :
- les éléments de brosse latéraux supérieurs vont permettre le brossage des faces externes (ou faces vestibulaires) et des faces internes (ou faces palatines) des dents supérieures ;
- les éléments de brosse latéraux inférieurs vont permettre le brossage des faces externes (ou faces vestibulaires) et des faces internes (ou faces linguales) des dents inférieures ; et
- les éléments de brosses transversaux supérieurs vont permettre le brossage des faces occlusales (ou faces masticatoires) des dents supérieures ; et
- les éléments de brosses transversaux inférieurs vont permettre le brossage des faces occlusales (ou faces masticatoires) des dents inférieures.

Il est bien clair, au sens de la présente demande, que les parois du support sont « conformées pour supporter » les différents éléments de brosse précités, signifie que les parois supportent ces éléments de brosse et/ou les parois sont munis de moyens de support des éléments de brosses, ces éléments de brosses pouvant être absents car détachables ou amovibles. Autrement dit, l'objet de la protection ne saurait être limité à des parois supportant des éléments de brosse, c'est-à-dire que la tête de brossage peut être proposée avec les éléments de brosses (ces éléments de brosses étant par exemple intégrés aux parois du support, ou fixés solidairement sur les parois du support), ou en variante être proposée sans les éléments de brosses (ces éléments de brosse étant alors amovibles ou détachables et propres à coopérer avec les parois du support).

Ensuite, avec l'invention, la pièce mobile et l'arbre d'entraînement accouplés, positionnés substantiellement dans le plan médian, vont permettre d'imprimer au support un mouvement oscillatoire efficace, avec au moins une composante de va-et-vient en translation selon une direction orthogonale au plan médian, pour un brossage conjoint des faces interne, externe et occlusales des dents inférieures et supérieures ; cette composante du mouvement oscillatoire constituant un mouvement vibrationnel qui participe activement à l'efficacité du brossage.

Au sens de la présente invention, la caractéristique selon laquelle l'arbre d'entraînement est couplé à la pièce mobile pour entraîner en oscillation la pièce mobile et le support selon un mouvement oscillatoire comprenant au moins une composante de va-et-vient en translation selon une direction orthogonale audit plan médian, signifie que l'accouplement entre l'arbre d'entraînement et la pièce mobile procure en utilisation une conversion d'un mouvement de l'arbre d'entraînement en un mouvement oscillatoire intégrant une composante de va-et-vient tel que décrit ci-dessus, sans pour autant que l'invention ne soit limitée à une accouplement spécifique, autrement dit à une conversion de mouvement spécifique entre l'arbre d'entraînement et la pièce mobile.

Au sens de la présente invention, la caractéristique selon laquelle « la pièce mobile et l'arbre d'entraînement s'étendent substantiellement dans le plan médian du support » signifie que la pièce mobile et l'arbre d'entraînement sont des pièces allongées s'étendant selon des directions longitudinales respectives qui sont incluses dans le plan médian du support avec une liberté angulaire de ± 10 degrés vis-à-vis du plan médian, voire ± 5 degrés vis-à-vis du plan médian. Autrement dit, le plan médian coupe substantiellement la pièce mobile et l'arbre d'entraînement dans leurs longueurs respectives.

Ce positionnement de la pièce mobile et de l'arbre d'entraînement vis-à-vis du plan médian du support, va permettre une tenue ergonomique du manche de la brosse à dents électrique. En effet, en situation, le manche qui est parallèle, voire substantiellement colinéaire, à l'arbre d'entraînement, s'étendra dans le plan médian du support, ce plan médian étant sensiblement coplanaire au plan de symétrie du visage au début du brossage (support au niveau des incisives centrales), de sorte que le manche se tient plus ou moins comme on tient un cornet de glace ou un microphone, procurant une tenue particulièrement ergonomique et non traumatisante pour le bras et l'épaule pendant toute la durée du brossage ; durée du brossage qui est en outre considérablement raccourcie grâce à la multiplicité des éléments de brosses et grâce au mouvement de brossage coulissant de droite à gauche et de gauche à droite.

Selon une variante, le plan médian est un plan de symétrie du support.

De manière générale, lorsque les éléments de brosses sont en place sur le support, des éléments de brosses latéraux supérieurs, des éléments de brosses transversaux supérieurs, des éléments de brosses latéraux inférieurs et des éléments de brosses transversaux inférieurs sont disposés de part et d'autre du plan médian, dans le sens où :
- une partie des éléments de brosses latéraux supérieurs, des éléments de brosses transversaux supérieurs, des éléments de brosses latéraux inférieurs et des éléments de brosses transversaux inférieurs est disposée sur la droite du plan médian ; et
- une autre partie des éléments de brosses latéraux supérieurs, des éléments de brosses transversaux supérieurs, des éléments de brosses latéraux inférieurs et des éléments de brosses transversaux inférieurs est disposée sur la gauche du plan médian.

Il est également à noter que le support est élastiquement déformable pour autoriser une déformation arquée de part et d'autre du plan médian, et notamment une déformation arquée symétrique vis-à-vis du plan médian.

Selon une caractéristique, le support est élastiquement déformable en étant réalisé au moins partiellement dans un matériau flexible élastiquement déformable.

En variante, le support est élastiquement déformable en étant réalisé sous la forme d'une armature ou ossature propre à se déformer élastiquement.

Dans une réalisation particulière, le support est réalisé intégralement dans un matériau flexible élastiquement déformable.

Avantageusement, le support est réalisé d'un seul tenant dans un matériau flexible élastiquement déformable.

Selon une possibilité, le matériau flexible élastiquement déformable est du type matériau plastique, matériau polymère ou matériau élastomère.

Selon une autre possibilité, le matériau flexible élastiquement déformable est un élastomère silicone, un élastomère isobutylène-isoprène, un caoutchouc synthétique ou naturel, un élastomère polyacrylique.

Selon une autre possibilité, le support est réalisé par moulage.

Dans une réalisation particulière, au moins une des parois latérales du support présente au moins une saignée formant une amorce de pliage ou au moins une encoche pour favoriser une déformation arquée, ce qui présente l'avantage de favoriser la souplesse du support pour épouser les arcades dentaires supérieure et inférieure pendant le brossage.

Selon une possibilité, le support présente plusieurs saignées ou plusieurs encoches, contribuant à augmenter la flexibilité du support pour épouser les arcades dentaires en situation.

Selon une variante, la ou chaque saignée est formée sur une face externe et/ou sur une face interne d'au moins une paroi latérale.

Selon une variante, la ou chaque saignée s'étend parallèlement à une direction verticale orthogonale aux directions principales (ou d'extension) des gorges décrites ci-avant ; lesdites directions principales des gorges étant orthogonales au plan médian.

Selon une possibilité, les parois latérales et la paroi transversale sont réalisées dans un matériau flexible élastiquement déformable.

Selon une autre possibilité, la paroi transversale présente des fenêtres traversantes conformées pour recevoir des éléments de brosses transversaux présentant des brosses supérieures formant les éléments de brosses transversaux supérieurs, et des brosses inférieures opposées formant les éléments de brosses transversaux inférieurs.

Dans cette réalisation, les fenêtres forment des moyens de fixation amovible adaptés pour une fixation amovible des éléments de brosses transversaux sur la paroi transversale, mais il à noter que d'autres formes de moyens de fixation amovible pourraient être envisagés sans s'éloigner de l'invention.

Conformément à une autre caractéristique avantageuse de l'invention, la gorge supérieure et la gorge inférieure sont des gorges rectilignes bordées par des parois latérales substantiellement parallèles et planes.

Comme expliqué précédemment, avec un tel support, il n'est pas utile d'avoir des gorges arquées qui contribuent à accroître les dimensions, bien que de telles formes arquées demeurent envisageables, notamment pour des dentitions enfantines.

Ainsi, selon une variante, la gorge supérieure et la gorge inférieure sont des gorges incurvées bordées par des parois latérales incurvées.

Autrement dit, l'invention ne saurait pas être limitée à des parois latérales substantiellement parallèles et planes, mais englobent plus généralement des parois latérales en vis-à-vis pour délimiter, avec la paroi transversale, une gorge inférieure et une gorge supérieure.

Dans un mode de réalisation particulier, l'une au moins des parois latérales et de la paroi transversale présente des fenêtres traversantes conformées pour recevoir par emboîtement des éléments de brosses.

Ainsi, les éléments de brosse peuvent être retirés et remplacés, un par un, sans avoir à remplacer le support et les autres éléments de la tête de brossage. Dans ce mode de réalisation, les fenêtres forment des moyens de fixation amovible adaptés pour une fixation amovible des éléments de brosses sur la ou les parois du support, mais il à noter que d'autres formes de moyens de fixation amovible pourraient être envisagés sans s'éloigner de l'invention.

Selon une variante, les deux parois latérales et la paroi transversale présentent de telles fenêtres traversantes.

Selon une possibilité de l'invention, chaque fenêtre présente une bordure interne dans laquelle est prévu au moins un tenon saillant, ou inversement au moins une rainure, de sorte que chaque élément de brosse peut être emboîté dans une fenêtre par une coopération d'un tenon dans une rainure.

De telles fenêtres sont adaptées au cas où chaque élément de brosses comprend une embase pourvue d'un pourtour externe dans lequel est prévue au moins une rainure, ou inversement au moins un tenon saillant, de sorte que chaque élément de brosse est emboîté dans une fenêtre par coopération du tenon dans la rainure.

Selon une autre possibilité de l'invention, les fenêtres sont prévues dans des parois flexibles élastiquement déformables, ce qui permet de monter en force les éléments de brosses, avec une tenue mécanique efficace et durable.

Selon une autre possibilité, chaque fenêtre présente sur sa bordure interne un cadre ou insert rigide de renfort dans lequel est prévu le tenon saillant ou la rainure.

Ainsi, Il peut être envisagé la possibilité de positionner des cadres ou inserts rigides qui se placent dans les fenêtres (par exemple par un surmoulage ou par un moulage bi-injection) et qui reçoivent les éléments de brosses afin de renforcer leurs ancrages et d'éviter qu'ils ne se désolidarisent selon la flexibilité du support.

Selon une possibilité, le mouvement oscillatoire comprend uniquement la composante de va-et-vient en translation selon une direction orthogonale au plan médian du support (et donc accessoirement sensiblement parallèle aux directions d'extension des deux gorges inférieure et supérieure).

Selon une caractéristique, la pièce mobile du dispositif oscillatoire est une pièce rigide.

Selon une variante, la pièce mobile du dispositif oscillatoire s'étend selon une direction orthogonale aux parois latérales.

Selon une autre caractéristique, la pièce mobile du dispositif oscillatoire s'étend au niveau de la paroi transversale du support, donc sensiblement au niveau de la jonction entre l'arcade dentaire supérieure et l'arcade dentaire inférieure en situation de brossage, contribuant à une manipulation aisée par l'utilisateur.

Selon une autre caractéristique, la pièce mobile du dispositif oscillatoire présente une partie de montage qui traverse le support dans sa paroi latérale, cette partie de montage présentant une portion centrale s'étendant dans la paroi latérale et qui présente une face supérieure tournée vers la gorge supérieure et une face inférieure tournée vers la gorge inférieure.

Cette partie de montage est ainsi placée au cœur - ou au centre - du support, pour optimiser la transmission du mouvement oscillatoire à l'intégralité du support.

Selon une possibilité, la face supérieure et la face inférieure de la portion centrale de la partie de montage de la pièce mobile supportent des brosses formant respectivement un élément de brosse transversal supérieur et un élément de brosse transversal inférieurs ; de telles brosses s'étendant le cas échéant respectivement à l'intérieur de la gorge supérieure et de la gorge inférieure.

Selon une caractéristique, la partie de montage de la pièce mobile est emboîtée dans deux orifices de montage traversant ménagés en vis-à-vis dans les parois latérales respectives du support.

Selon une variante, la partie de montage de la pièce mobile est noyée à l'intérieur du support.

Dans une réalisation particulière, la partie de montage de la pièce mobile présente deux portions d'extrémité opposées qui sont noyées à l'intérieur des parois latérales respectives, ou chaque portion d'extrémité présente :
- une face supérieure tournée vers la gorge supérieure, ladite face supérieure supportant une brosse formant un élément de brosse latéral supérieur qui traverse la paroi latérale correspondante pour déboucher dans la gorge supérieure ; et
- une face inférieure tournée vers la gorge inférieure, ladite face inférieure supportant une brosse formant un élément de brosse latéral inférieur qui traverse la paroi latérale correspondante pour déboucher dans la gorge inférieure.

Avantageusement, deux pièces internes rigides sont noyées à l'intérieur du support, où chaque pièce interne est couplée rigidement à la partie de montage de la pièce mobile de part et d'autre de la pièce mobile, où chaque pièce interne comprend une portion centrale qui est noyée à l'intérieur de la paroi transversale et qui présente :
- une face supérieure tournée vers la gorge supérieure, ladite face supérieure supportant une brosse formant un élément de brosse transversal supérieur qui traverse la paroi transversale pour déboucher dans la gorge supérieure ; et
- une face inférieure opposée tournée vers la gorge inférieure, ladite face inférieure supportant une brosse formant un élément de brosse transversal inférieur qui traverse la paroi transversale pour déboucher dans la gorge inférieure.

De telles pièces internes sont avantageuses pour une transmission du mouvement oscillatoire dans l'ensemble du support, et donc sur l'ensemble des éléments de brosses. Par ailleurs, le couplage rigide entre la partie de montage de la pièce mobile et les deux pièces internes est conformé pour autoriser une déformation arquée du support pour prendre une conformation arquée et ainsi épouser les arcades dentaires. La rigidité de ce couplage est destinée à une bonne transmission du mouvement oscillatoire de la pièce mobile vers les deux pièces internes.

Encore avantageusement, chaque pièce interne comprend deux portions d'extrémité opposées qui sont noyées à l'intérieur des parois latérales respectives, ou chaque portion d'extrémité présente :
- une face supérieure tournée vers la gorge supérieure, ladite face supérieure supportant une brosse formant un élément de brosse latéral supérieur qui traverse la paroi latérale correspondante pour déboucher dans la gorge supérieure ; et
- une face inférieure tournée vers la gorge inférieure, ladite face inférieure supportant une brosse formant un élément de brosse latéral inférieur qui traverse la paroi latérale correspondante pour déboucher dans la gorge inférieure.

Dans une réalisation particulière, les éléments de couplage comprennent une fente oblongue ménagée dans la partie d'accouplement, et une came excentrée prévue sur une extrémité supérieure de l'arbre d'entraînement, avec la came excentrée qui est engagée dans cette fente oblongue, de manière à ce qu'une rotation de l'arbre d'entraînement soit convertie en une oscillation de va-et-vient de la pièce mobile et du support.

Cette transmission de la rotation de l'arbre d'entraînement en un mouvement oscillant de va-et-vient est ainsi une transmission de type came-suiveur, le suiveur étant la partie d'accouplement avec sa fente oblongue.

Cependant, et comme évoqué précédemment, l'invention ne saurait être limitée à un tel accouplement came-suiveur, et d'autres types d'accouplement peuvent être envisagés entre l'arbre d'entraînement et la pièce mobile pour convertir un mouvement de l'arbre d'entraînement (et en particulier mais non limitativement un mouvement rotatif de l'arbre d'entraînement) en un mouvement oscillatoire de la pièce mobile intégrant une composante de va-et-vient comme décrit précédemment.

Dans une réalisation avantageuse, la partie d'accouplement est enchâssée dans un boîtier dans lequel sont prévus deux trous de guidage opposés, et la partie d'accouplement comprend deux doigts de guidage engagés dans ces trous de guidage, pour un guidage de la pièce mobile selon le mouvement de va-et-vient.

Dans un mode de réalisation particulier, la tête de brossage comprend en outre un manchon principal entourant au moins partiellement l'arbre d'entraînement et sur lequel est montée la pièce mobile, ce manchon principal étant prévu pour être monté de manière amovible sur un manche logeant un moteur électrique couplé à un arbre de sortie propre à un accouplement avec l'arbre d'entraînement.

Dans une réalisation particulière, la tête de brossage comprend en outre des éléments de brosses latéraux supérieurs et des éléments de brosses latéraux inférieurs supportés par les parois latérales du support, ainsi que des éléments de brosses transversaux supérieurs et des éléments de brosses transversaux inférieurs supportés par la paroi transversale du support.

En effet, ces éléments de brosses peuvent être fixés à demeure sur le support, ou bien peuvent être fixés de manière amovible ou détachable sur le support de sorte que, dans ce second cas de figure avec éléments de brosses amovibles, il est envisageable d'avoir une fourniture du support sans les éléments de brosses montés dessus.

Un kit de brossage comprenant au moins un élément de brosses adapté pour être emboîté dans une fenêtre traversante prévue pour la tête de brossage décrite précédemment est décrit. Ce kit ne fait toutefois pas partie de l'invention.

Selon une variante, le kit de brossage comprend plusieurs éléments de brosses adaptés pour être emboîtés dans les fenêtres traversantes prévues pour la tête de brossage.

Selon une variante, le kit de brossage comprend autant d'éléments de brosses que de fenêtres traversantes prévues pour la tête de brossage, chaque élément de brosses étant adapté pour une fenêtre dédiée.

Selon une possibilité, chaque élément de brosses comprend une embase pourvue d'un pourtour périphérique dans lequel est prévue au moins une rainure, ou inversement au moins un tenon saillant, de sorte que chaque élément de brosse peut être emboîté dans une fenêtre par une coopération d'un tenon dans une rainure.

Avantageusement, les embases des éléments de brossage sont rigides, pour une tenue mécanique améliorée dans les fenêtres.

Selon une possibilité, le kit de brossage comprend au moins un élément de brosse transversal comprenant une embase présentant une face supérieure supportant une brosse supérieure et une face inférieure, opposée à la face supérieure, et supportant une brosse inférieure.

D'autres caractéristiques et avantages de la présente invention apparaîtront à la lecture de la description détaillée ci-après, de deux exemples de mise en œuvre non limitatifs, faite en référence aux figures annexées dans lesquelles :
- la figure 1 est une vue en perspective de face d'une première brosse à dents selon l'invention, équipée d'une première tête de brossage conforme à un premier mode de réalisation de l'invention ;
- la figure 2 est une vue partielle en perspective de dos de la première brosse à dents de la figure 1 ;
- la figure 3 est une vue partielle de côté de la première brosse à dents des figures 1 et 2 ;
- la figure 4 est une vue en perspective de dos et éclatée de la première tête de brossage des figures 1 à 3, sans les éléments de brosses ;
- la figure 5 est une vue en perspective de face et éclatée de la première tête de brossage des figures 1 à 3, sans les éléments de brosses ;
- la figure 6 est une vue en perspective du support de la première tête de brossage des figures 1 à 5, avec un unique élément de brosses latéral situé en face de sa fenêtre de réception ;
- la figure 7 est une vue en perspective de dos (à gauche) et de côté (à droite) d'un élément de brosses latéral ;
- les figures 8 et 9 sont des vues de face et partielles d'un utilisateur (seules sa bouche et une main étant illustrées) qui tient une première brosse à dents selon l'invention, au début du brossage au moment de l'introduction du support dans la bouche avant fermeture des arcades dentaires sur le support (figure 8) et après fermeture des arcades dentaires respectivement dans les gorges inférieure et supérieure du support (figure 9) ;
- les figures 10 et 11 sont des vues de face et partielles d'un utilisateur (le haut du corps, la tête et un bras complet étant illustrés) qui tient une première brosse à dents selon l'invention, pendant le brossage des incisives (figure 10) et pendant le brossage des molaires du fond à gauche (figure 11) ; et
- la figure 12 est une vue de côté d'un utilisateur (le haut du corps, la tête et un bras complet étant illustrés) qui tient une première brosse à dents selon l'invention, pendant le brossage des incisives ;
- la figure 13 est une vue en perspective de dos d'une seconde brosse à dents selon l'invention, équipée d'une tête de brossage conforme à un second mode de réalisation de l'invention ;
- la figure 14 est une vue partielle de côté de la seconde brosse à dents de la figure 13 ;
- la figure 15 est une vue de face de la seconde tête de brossage des figures 13 et 14 ;
- la figure 16 est une vue de dessus de la seconde tête de brossage des figures 13 à 15 ; et
- la figure 17 est une vue en perspective de dos et partiellement éclatée de la seconde tête de brossage des figures 13 à 16, sans les éléments de brosses.

La description détaillée qui suit porte sur une première brosse à dents électrique 1 selon l'invention, et sur une seconde brosse à dents électrique 100 selon l'invention, où ces deux brosses à dents électrique 1, 100 sont présentées et décrites à titre d'exemples illustratifs et non limitatifs de l'invention. Dans la description qui suit, et sur l'ensemble des figures, des références identiques ou analogues désignent des organes, ensemble d'organes, moyens fonctionnels ou moyens structurels identiques ou analogues.

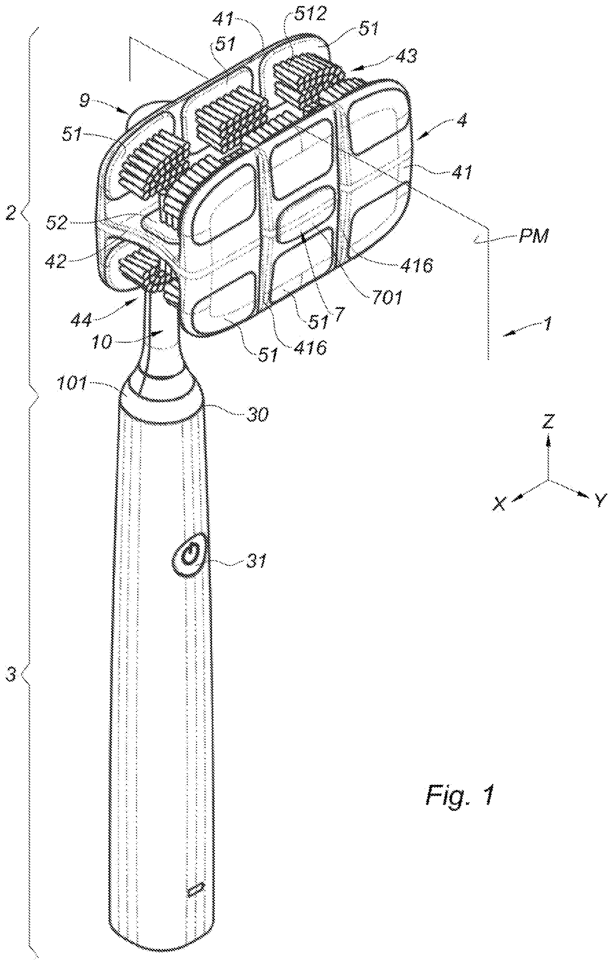

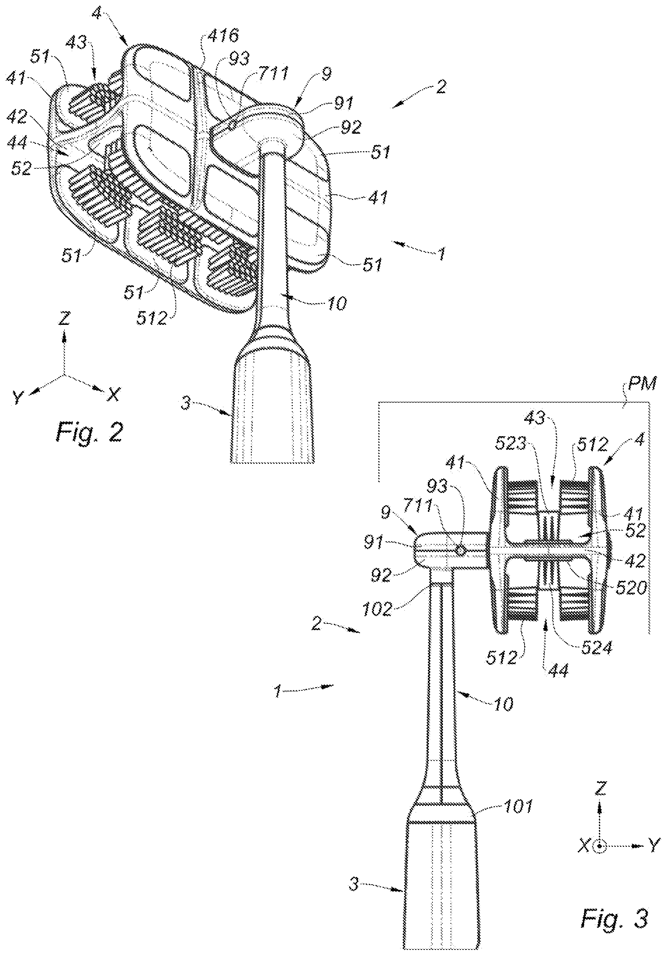

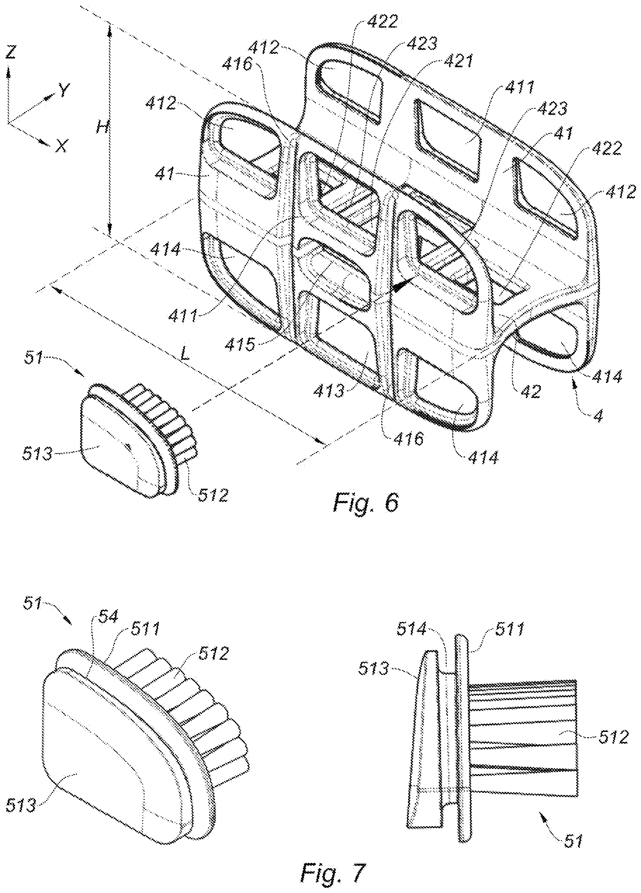

La suite de la description porte sur la première brosse à dents électrique 1, en référence aux figures 1 à 7.

En référence aux figures 1 à 3, la première brosse à dents électrique 1 selon l'invention comprend une première tête de brossage 2 et un manche 3 logeant un moteur électrique (non illustré) couplé à un arbre de sortie (non illustré) qui dépasse d'une extrémité supérieure 30 du manche 3 ; un interrupteur 31 étant prévu sur le manche 3 pour permettre le démarrage/arrêt du moteur électrique.

La première tête de brossage 2 s'accouple mécaniquement sur l'extrémité supérieure 30, notamment par clipsage ou encliquetage.

La première tête de brossage 2 comprend un support 4 réalisé intégralement et d'un seul tenant dans un matériau flexible élastiquement déformable, tel qu'un matériau élastomère.

Ce support 4 présente deux parois latérales 41 parallèles et une paroi transversale 42 reliant à mi-hauteur les deux parois latérales 41 de sorte que les parois latérales 41 et la paroi transversale 42 délimitent, de part et d'autre de la paroi transversale 42, une gorge supérieure 43 et une gorge inférieure 44.

Ainsi, la gorge supérieure 43 et la gorge inférieure 44 sont opposées, dans la mesure où la gorge supérieure 43 est ouverte sur le haut tandis que la gorge inférieure 44 est ouverte sur le bas et où ces deux gorges 42, 43 sont disposées de part et d'autre de la paroi transversale 42 qui les sépare.

Les parois latérales 41 s'étendent parallèlement à un plan (X, Z) défini par une direction longitudinale X et par une direction verticale Z orthogonale à la direction longitudinale X. Les parois latérales 41 sont substantiellement rectangulaires, avec une longueur L selon la direction longitudinale X et une hauteur H selon la direction verticale Z, où la longueur L est supérieure à la hauteur H. A titre d'exemple non limitatif, la longueur L est comprise entre 3 et 7 centimètres, et la hauteur H est comprise entre 2 et 5 centimètres.

La gorge supérieure 43 est délimitée par les parties des parois latérales 41 situées au-dessus de la paroi transversale 42 et également par la paroi transversale 42 qui forme le fond, et la gorge inférieure 44 est délimitée par les parties des parois latérales 41 situées en-dessous de la paroi transversale 42 et par la paroi transversale 42 qui forme le fond.

Ainsi, le support 4 présente une section transversale en forme générale de « H », selon un plan médian PM parallèle à un plan (Y, Z), où la direction transversale Y est orthogonale à la fois à la direction longitudinale X et à la direction verticale Z. Ce plan médian PM forme par ailleurs un premier plan de symétrie du support 4.

Le support 4 présente une deuxième symétrie par rapport à un deuxième plan de symétrie parallèle au plan (X, Z) et aux parois latérales 41, ce deuxième plan de symétrie coupant la paroi transversale 42.

Le support 4 présente enfin une troisième symétrie par rapport à un troisième plan de symétrie parallèle au plan (X, Y) et orthogonal aux parois latérales 41, ce troisième plan de symétrie étant coplanaire avec la paroi transversale 42.

Les parois latérales 41 sont substantiellement parallèles au plan (X, Z) et sont substantiellement planes, et la paroi transversale 42 est orthogonale aux parois latérales 41 et est substantiellement plane, et ainsi la gorge supérieure 43 et la gorge inférieure 44 sont des gorges rectilignes, c'est-à-dire non arquées ou non incurvées, qui s'étendent parallèlement selon des directions d'extension parallèles à la direction longitudinale X.

Les parois latérales 41 présentent des fenêtres 411, 412, 413, 414 en vis-à-vis, c'est-à-dire que chaque fenêtre 411, 412, 413, 414 ménagée sur une paroi latérale 41 est en regard - ou en vis-à-vis - d'une fenêtre 411, 412, 413, 414 ménagée sur l'autre paroi latérale 41. Deux fenêtres en vis-à-vis sont alignées selon une direction parallèle à la direction transversale Y. Chaque fenêtre 411, 412, 413, 414 est traversante, c'est-à-dire forme un trou traversant la paroi latérale 41 concernée dans son épaisseur.

Chaque paroi latérale 41 présente :
- une fenêtre supérieure centrale 411 encadrée, selon une direction parallèle à la direction longitudinale X, par deux fenêtres supérieures de coin 412 prévues dans les coins supérieurs de la paroi latérale 41, ces fenêtres 411, 412 débouchant dans la gorge supérieure 43 ; et
- une fenêtre inférieure centrale 413 encadrée, selon une direction parallèle à la direction longitudinale X, par deux fenêtres inférieures de coin 414 prévues dans les coins inférieurs de la paroi latérale 41, ces fenêtres 413, 414 débouchant dans la gorge inférieure 44.

Sur la droite la fenêtre supérieure de coin 412 et la fenêtre inférieure de coin 413 sont alignées selon une direction parallèle à la direction verticale Z, au centre la fenêtre supérieure centrale 411 et la fenêtre inférieure centrale 413 sont alignées selon une direction parallèle à la direction verticale Z, et sur la gauche la fenêtre supérieure de coin 412 et la fenêtre inférieure de coin 413 sont alignées selon une direction parallèle à la direction verticale Z.

Les fenêtres 411, 412 sont prévues en partie haute des parois latérales 41 le long de leurs bords supérieurs longitudinaux, tandis que les fenêtres 413, 414 sont prévues en partie basse des parois latérales 41 le long de leurs bords inférieurs longitudinaux.

Chaque paroi latérale 41 présente également un orifice de montage 415 traversant situé à mi longueur (au milieu selon une direction parallèle à la direction longitudinale X) et à mi hauteur (au milieu selon une direction parallèle à la direction verticale Z), de sorte que les deux orifices de montage 415 sont disposés en vis-à-vis, en étant alignés selon une direction parallèle à la direction transversale Y. Ces orifices de montage 415 se situent à la croisée du premier plan médian de symétrie et du second plan médian parallèle de symétrie.

Ces orifices de montage 415 débouchent dans l'épaisseur de la paroi transversale 42. Chaque orifice de montage 415 est encadré, selon une direction parallèle à la direction verticale Z, par la fenêtre supérieure centrale 411 et la fenêtre inférieure centrale 413.

Chaque paroi latérale 41 présente également deux saignées 416 s'étendant parallèlement à la direction verticale Z, ces deux saignées 416 s'étendant de part et d'autre de la fenêtre supérieure centrale 411, de la fenêtre inférieure centrale 413 et de l'orifice de montage 415. Ces saignées 416 forment des amorces de pliage ou des lignes de faiblesse (ou de moindre épaisseur) qui contribuent à une meilleure flexibilité du support 4 pour épouser les arcades dentaires en situation.

Ces saignées 416 peuvent être ménagées sur l'intérieur des parois latérales 41, ou sur l'extérieur des parois latérales 41, ou à la fois sur l'intérieur et l'extérieur des parois latérales 41.

La paroi transversale 42 présente trois fenêtres 421, 422, à savoir une fenêtre centrale 421 encadrée, selon une direction parallèle à la direction longitudinale X, par deux fenêtres distale 422. La fenêtre centrale 421 s'étend entre les deux orifices de montage 415, selon une direction parallèle à la direction transversale Y.

La paroi transversale 42 présente également deux fentes 423 oblongues et traversantes, s'étendant parallèlement la direction transversale Y, et qui sont disposées de part et d'autre de la fenêtre centrale 421, entre la fenêtre centrale 421 et les fenêtres distale 422. Ces fentes 423 resteront vides ou inoccupées et auront pour fonction de favoriser la déformation des parois latérales 41 qui épouseront les formes arquées des arcades dentaires supérieure et inférieure.

La première tête de brossage 2 comprend également des éléments de brosses 51, 52 qui sont supportés par le support 4 et qui s'étendent à l'intérieur de la gorge supérieure 43 et de la gorge inférieure 44 pour le brossage conjoint des dents supérieures et des dents inférieures.

Les éléments de brosses 51, 52 comprennent des éléments de brosses latéraux 51 qui sont supportés par les parois latérales 41, et des éléments de brosses transversaux 52 qui sont supportés par la paroi transversale 42. Les éléments de brosses 51, 52 sont montés de manière amovible, de sorte qu'ils peuvent être retirés et remplacés si nécessaire de manière manuelle et sans outillage.

Les éléments de brosses latéraux 51 sont emboîtés dans les fenêtres 411, 412, 413, 414 prévues dans les parois latérales 41. A ce titre, chaque élément de brosse latéral 51 comprend une embase 510 présentant une face interne 511 supportant une brosse 512 composée de poils de brossage, une face externe 513 opposée à la face interne 511 et un pourtour périphérique dans lequel est prévue une rainure 514 sur toute la périphérie. L'embase 510 peut être rigide, notamment en étant réalisée dans un matériau thermoplastique tel que le polypropylène.

Chaque fenêtre 411, 412, 413, 414 présente une bordure interne dans laquelle est prévu un tenon saillant sur toute sa périphérie, de sorte que chaque élément de brosse latéral 51 est emboîté dans une fenêtre 411, 412, 413, 414 par coopération du tenon dans la rainure 514 (ou coopération mâle / femelle), c'est-à-dire avec le tenon engagé à l'intérieur de la rainure 514 de l'élément de brosse latérale 51. Avec l'élasticité ou flexibilité de chaque paroi latérale 41, chaque élément de brosse latéral 51 est monté en force dans la fenêtre 411, 412, 413, 414 correspondante jusqu'à ce que le tenon soit engagé à l'intérieur de la rainure 514, bloquant ainsi l'élément de brosse latéral 51 dans la fenêtre.

Une fois l'élément de brosse latéral 51 bloqué dans sa fenêtre, la brosse 512 s'étend dans la gorge 43, 44 concernée, et la face externe 513 s'étend sur l'extérieur du support 4.

Ainsi, une fois les éléments de brosses latéraux 51 en place sur le support 4, on distingue :
- des éléments de brosses latéraux 51 supérieurs qui sont disposés en vis-à-vis dans les fenêtres supérieures 411, 412 et qui sont prévus pour le brossage conjoint des faces interne et externe des dents supérieures ; et
- des éléments de brosses latéraux 51 inférieurs qui sont disposés en vis-à-vis dans les fenêtres inférieures 413, 414 et qui sont prévus pour le brossage conjoint des faces interne et externe des dents inférieures.

Les éléments de brosses transversaux 52 sont emboîtés dans les fenêtres distales 422 prévues dans la paroi transversale 42. A ce titre, chaque élément de brosse transversal 51 comprend une embase 520 présentant une face supérieure supportant une brosse supérieure 523 composée de poils de brossage, une face inférieure opposée à la face supérieure et supportant une brosse inférieure 524 composée de poils de brossage et un pourtour périphérique dans lequel est prévue une rainure sur toute la périphérie. L'embase 520 peut être rigide, notamment en étant réalisée dans un matériau thermoplastique tel que le polypropylène.

Chaque fenêtre distale 422 présente une bordure interne dans laquelle est prévu un tenon saillant sur toute sa périphérie, de sorte que chaque élément de brosse transversal 52 est emboîté dans une fenêtre distale 422 par coopération du tenon dans la rainure (ou coopération mâle / femelle), c'est-à-dire avec le tenon engagé à l'intérieur de la rainure de l'élément de brosse transversal 52. Avec l'élasticité ou flexibilité de la paroi transversale 42, chaque élément de brosse transversal 52 est monté en force dans la fenêtre distale 422 correspondante jusqu'à ce que le tenon soit engagé à l'intérieur de la rainure, bloquant ainsi l'élément de brosse transversal 52 dans la fenêtre.

Une fois l'élément de brosse transversal 52 bloqué dans sa fenêtre, la brosse supérieure 523 s'étend dans la gorge supérieure 43 et la brosse inférieure 524 s'étend dans la gorge inférieure 44.

Ainsi, une fois les éléments de brosses transversaux 52 en place sur le support 4, on distingue :
- les brosses supérieures 523 (ou éléments de brosses transversaux supérieurs 523) qui sont prévues pour le brossage conjoint des faces occlusales des dents supérieures ; et
- les brosses inférieures 524 (ou éléments de brosses transversaux inférieurs 524) qui sont prévues pour le brossage conjoint des faces occlusales des dents inférieures.

La première tête de brossage 2 comprend en outre un dispositif oscillatoire 6 propre à imprimer un mouvement oscillatoire au support 4, et en particulier un mouvement oscillatoire de va-et-vient selon une direction parallèle à la direction transversale Y, où ce dispositif oscillatoire 6 est porté par un manchon principal 10 prévu pour être monté de manière amovible sur l'extrémité supérieure 30 du manche 3.

Ce dispositif oscillatoire 6 comprend :
- une pièce mobile 7 rigide sur laquelle est monté le support 4,
- un arbre d'entraînement 8 couplé à la pièce mobile 7 pour entraîner en oscillation la pièce mobile 7 et le support 4 ; et
- un boîtier 9.

La pièce mobile 7 est une pièce oblongue s'étendant selon une direction longitudinale parallèle à la direction transversale Y et incluse dans le plan médian PM (ou premier plan de symétrie) du support 4 et elle présente une partie de montage 70 qui traverse le support 4 et qui est emboîtée dans les deux orifices de montage 415 ménagés en vis-à-vis dans les deux parois latérales 41. La partie de montage 70 présente :
- deux portions d'extrémité 701 opposées formant des protubérances qui sont emboîtés dans les orifices de montage 415 respectifs ;
- entre les deux portions d'extrémité 701 (donc entre les deux orifices de montage 415 en situation), une portion centrale 702 s'étendant à l'intérieur de la fenêtre centrale 421 prévue dans la paroi transversale 42.

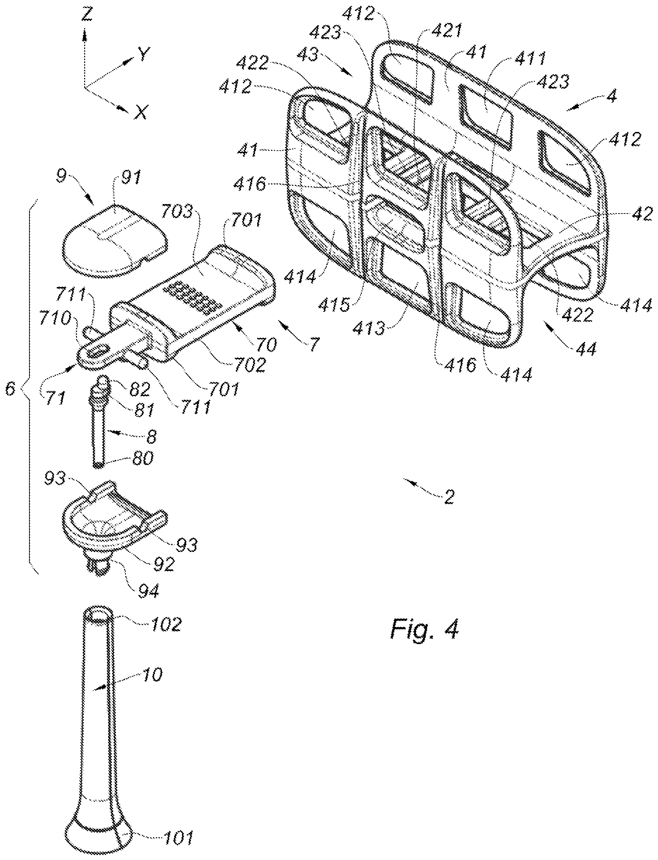

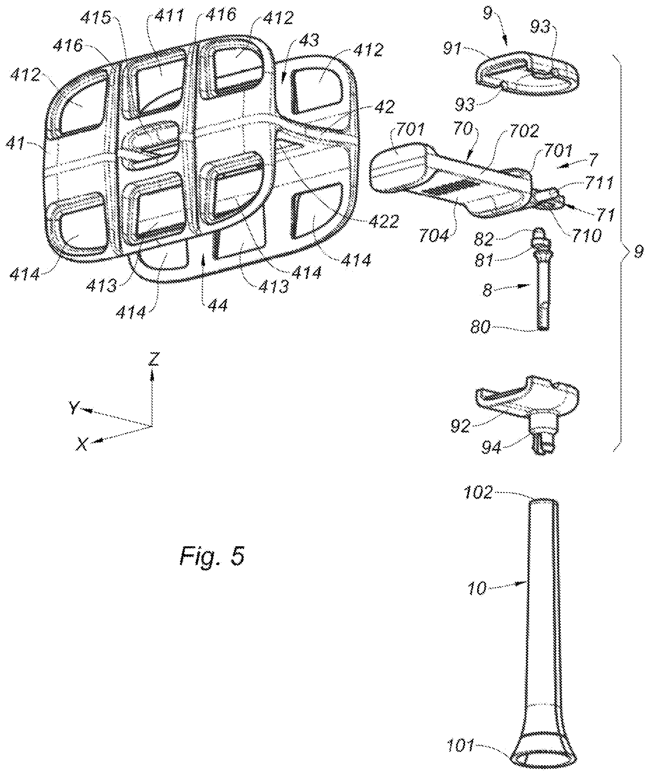

La portion centrale 702 présente ainsi une face supérieure 703 tournée vers la gorge supérieure 43 et une face inférieure 704 tournée vers la gorge inférieure 44. La face supérieure 703 supporte une brosse (non illustrée sur la figure 4 où seuls les trous de montage des poils de brosse sont visibles sur cette face supérieure 703) qui formera un élément de brosse transversal supérieur 523, et de même la face inférieure 704 supporte une brosse (non illustrée sur la figure 5 où seuls les trous de montage des poils de brosse sont visibles sur cette face inférieure 704) qui formera un élément de brosse transversal inférieur 524.

Avec l'élasticité ou flexibilité de chaque paroi latérale 41, la partie de montage 70 est monté en force dans les deux orifices de montage 415 jusqu'à ce que les portions d'extrémité 701 soient bloquées dans ces orifices de montage 415.

La pièce mobile 7 présente, dans le prolongement de l'une des portions d'extrémité 701 de la partie de montage 70, une partie d'accouplement 71 dans laquelle est ménagée une fente oblongue 710 s'étendant selon une direction parallèle à la direction transversale Y. Cette partie d'accouplement 71 présente également, de part et d'autre de la fente oblongue 710, deux doigts de guidage 711 s'étendant selon une direction parallèle à la direction longitudinale X.

La pièce mobile 7 est réalisée d'un seul tenant dans un matériau rigide, tel qu'un matériau métallique ou plastique.

L'arbre d'entraînement 8 est rotatif autour d'un axe de rotation parallèle à la direction verticale Z et inclus dans le plan médian PM du support 4, autrement dit cet arbre d'entraînement 8 présente une direction longitudinale parallèle à la direction verticale Z et incluse dans le plan médian PM du support 4. Ainsi, l'axe de rotation de l'arbre d'entraînement 8 et la direction longitudinale de la pièce mobile 7 sont perpendiculaires.

Cet arbre d'entraînement 8 présente une extrémité inférieure 80 propre à être couplée à l'arbre de sortie qui dépasse de l'extrémité supérieure 30 du manche 3.

L'arbre d'entraînement 8 présente une extrémité supérieure 81 munie d'une came excentrée 82, c'est-à-dire excentrée par rapport à l'axe de rotation. Cette came excentrée 82 est engagée dans la fente oblongue 710 de la partie d'accouplement 71 de la pièce mobile 7, de manière à ce qu'une rotation de l'arbre d'entraînement 8 soit convertie en une oscillation de va-et-vient, selon une direction parallèle à la direction transversale Y, de la pièce mobile 7 et ainsi du support 4.

Le boîtier 9 enchâsse intérieurement la partie d'accouplement 71 de la pièce mobile 7 et une partie de l'arbre d'entraînement 8 qui traverse ce boîtier 9.

Ce boîtier 9 comprend deux demi-coques 91, 92 rigides qui sont fixées l'une à l'autre, par exemple par encliquetage ou collage ou soudage, dont une demi-coque supérieure 91 et une demi-coque inférieure 92.

La demi-coque supérieure 91 chapeaute par-dessus la partie d'accouplement 71 de la pièce mobile 7 et forme ainsi un couvercle plein. La demi-coque inférieure 92 est quant à elle traversée par l'arbre d'entraînement 8, et présente à cet effet un passage central pour cet arbre d'entraînement 8. La demi-coque inférieure 92 présente un embout cylindrique 94, traversé par l'arbre d'entraînement 8, et qui est pourvu d'un élément de fixation pour une fixation sur le manchon principal 10. Dans l'exemple illustré, l'embout cylindrique 94 est pourvu d'un élément de fixation par encliquetage, avec des pattes flexibles crantées propres à s'encliqueter sur le manchon principal 10.

Les deux demi-coques 91, 92 présentent sur leurs bords jointifs des encoches semi-cylindriques de sorte que, une fois les demi-coques 91, 92 assemblées, le boîtier 9 présente deux trous de guidage 93 dans lesquels sont insérés les doigts de guidage 711 respectifs, de sorte que ces doigts de guidage 711 sont guidés en coulissement dans ces trous de guidage 93.

Le manchon principal 10 comprend une extrémité inférieure 101 prévue pour être fixée de manière amovible (ou détachable) sur l'extrémité supérieure 30 du manche 3, par exemple avec une fixation par encliquetage ou une fixation par quart de tour. Le manchon principal 10 comprend également une extrémité supérieure 102 sur laquelle est fixé l'embout cylindrique 94 du boîtier 9.

Le manchon principal 10 entoure la partie supérieure de l'arbre de sortie qui dépasse de l'extrémité supérieure 30 du manche 3, ainsi que la partie inférieure de l'arbre d'entraînement 8 qui dépasse de l'embout cylindrique 94. Le manche 3 s'étend parallèlement à l'arbre d'entraînement 8 (et donc parallèlement à la direction verticale Z) de sorte que ce manche 3 est perpendiculaire à la direction longitudinale de la pièce mobile 7.

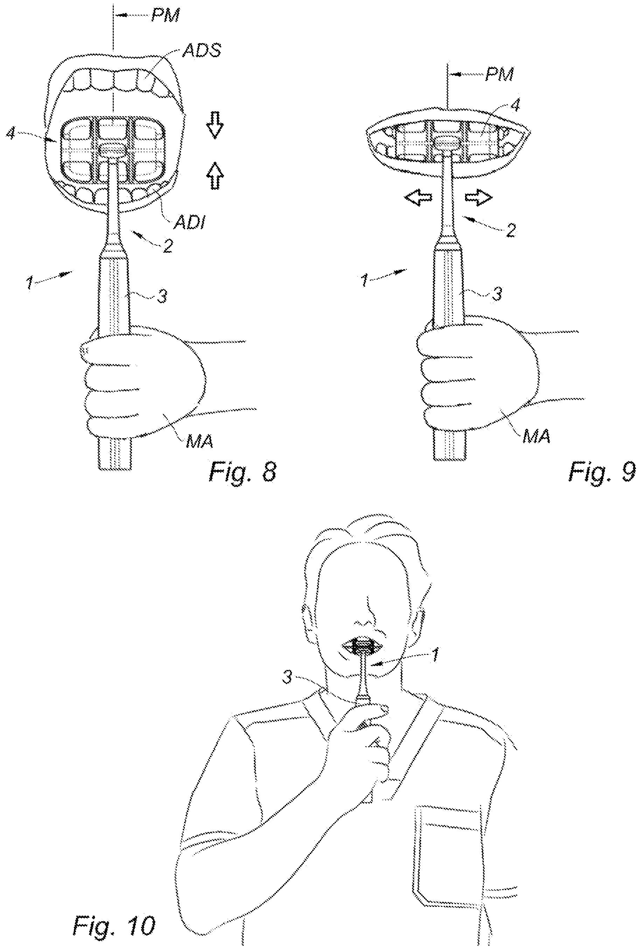

La suite de la description porte sur l'utilisation de la première brosse à dents 1, en référence aux figures 8 à 12.

Comme illustré sur la figure 8, avant brossage, l'utilisateur ouvre la bouche pour insérer le support 4 à l'intérieur de la bouche, plus ou moins au centre, de sorte à placer les incisives inférieures et supérieures, et éventuellement les canines inférieures et supérieures selon la longueur L du support 4, en face des gorges inférieure et supérieure du support 4.

Comme illustré sur la figure 9, l'utilisateur referme ensuite la bouche pour placer les incisives inférieures et supérieures, et éventuellement les canines inférieures et supérieures, à l'intérieur des gorges inférieure et supérieure du support 4. Ainsi, au début du brossage (et pendant tout le brossage), la direction longitudinale de la pièce mobile 7 est sensiblement horizontale (pour peu que l'utilisateur se tienne droit).

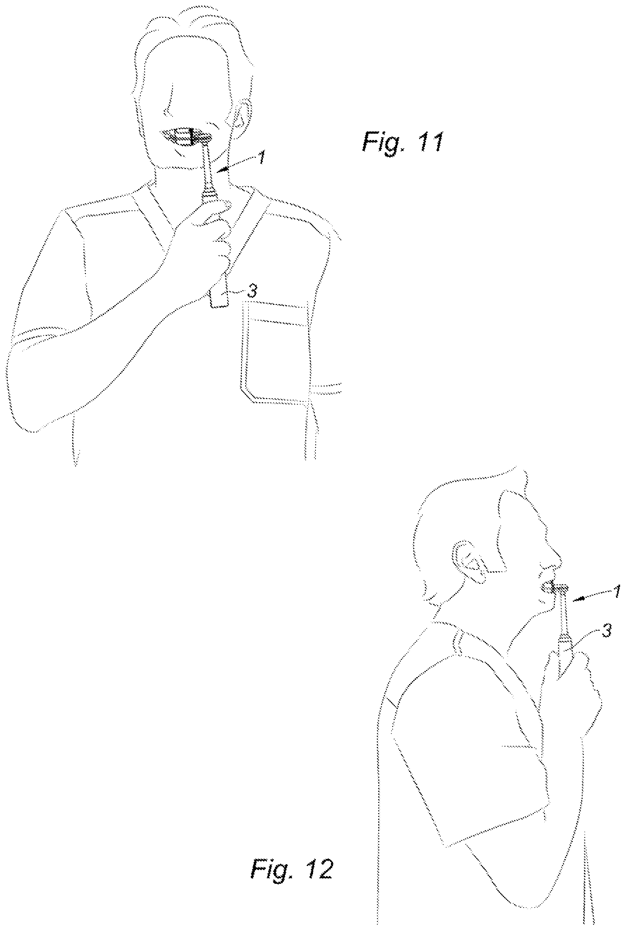

Comme visible sur les figures 10 et 12, au début du brossage, le manche 3 est proche de la verticale (car perpendiculaire à la direction longitudinale de la pièce mobile 7) tout étant inclus dans le plan de symétrie du visage, ce qui permet de limiter la pronation de l'avant bras qui pourrait engendrée des pathologies de conflit d'épaule. En effet, grâce à cette tenue qui est possible avec la tête de brossage 2 selon l'invention, l'avant bras est placé en prono-supination, de sorte que la tension capsulaire de l'épaule est limitée et le conflit d'épaule est ainsi évité, offrant ainsi une tenue ergonomique.

Ensuite, et comme visible sur la figure 11, l'utilisateur va aller à droite jusqu'aux molaires de droite puis revenir à gauche jusqu'aux molaires de gauche, sans avoir à ressortir le support 4 de la bouche pendant l'intégralité du brossage et juste en faisant coulisser le support 4 sur les arcades dentaires inférieure et supérieure refermées sur le support 4 qui n'a plus qu'à être guidé par l'utilisateur, qui continue de tenir le manche 3 proche de la verticale.

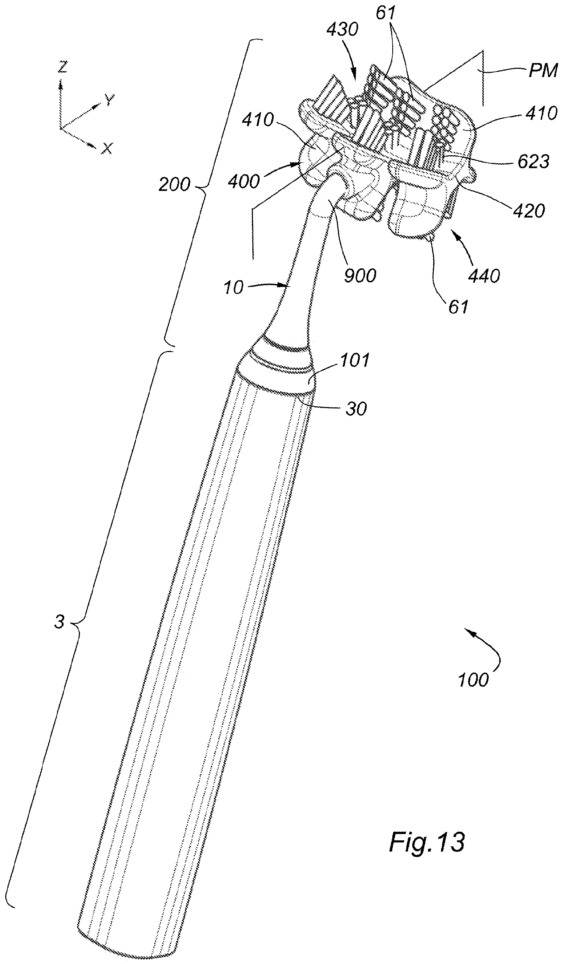

La suite de la description porte sur la seconde brosse à dents électrique 100, en référence aux figures 13 à 17.

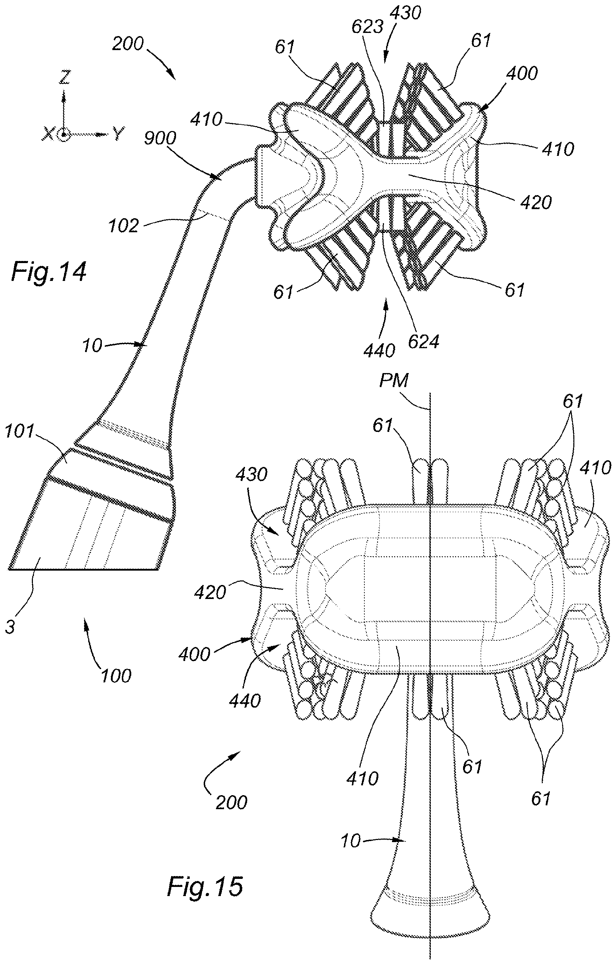

En référence aux figures 13 et 14, la seconde brosse à dents électrique 100 selon l'invention comprend une seconde tête de brossage 200 et un manche 3 logeant un moteur électrique (non illustré) couplé à un arbre de sortie (non illustré) qui dépasse d'une extrémité supérieure 30 du manche 3 ; ce manche 3 étant similaire à celui décrit précédemment pour la première brosse à dents électrique 1.

La seconde tête de brossage 200 s'accouple mécaniquement sur l'extrémité supérieure 30, notamment par clipsage ou encliquetage.

La seconde tête de brossage 200 comprend un support 400 réalisé intégralement et d'un seul tenant dans un matériau flexible élastiquement déformable, tel qu'un matériau élastomère.

Ce support 400 présente deux parois latérales 410 en vis-à-vis et une paroi transversale 420 reliant à mi-hauteur les deux parois latérales 410 de sorte que les parois latérales 410 et la paroi transversale 420 délimitent, de part et d'autre de la paroi transversale 42, une gorge supérieure 430 et une gorge inférieure 440.

Ainsi, la gorge supérieure 430 et la gorge inférieure 440 sont opposées, dans la mesure où la gorge supérieure 430 est ouverte sur le haut tandis que la gorge inférieure 440 est ouverte sur le bas et où ces deux gorges 420, 430 sont disposées de part et d'autre de la paroi transversale 420 qui les sépare.

A la différence du support 4 de la première tête de brossage 2, le support 400 de la seconde tête de brossage 200 présente des parois latérales 410 qui présentent chacune une première courbure telle que, dans un plan de coupe correspondant au plan médian PM (déjà décrit pour la première tête de brossage 2), chaque paroi latérale 410 présente une section incurvée, ou en forme de « C ».

Plus précisément, chaque paroi latérale 410 présente une face interne (tournée sur l'intérieur du support 400 du côté des gorges 430, 440) qui est convexe dans le plan médian PM, et une face externe (tournée sur l'extérieur du support 400 à l'opposée des gorges 430, 440) qui est concave dans le plan médian PM.

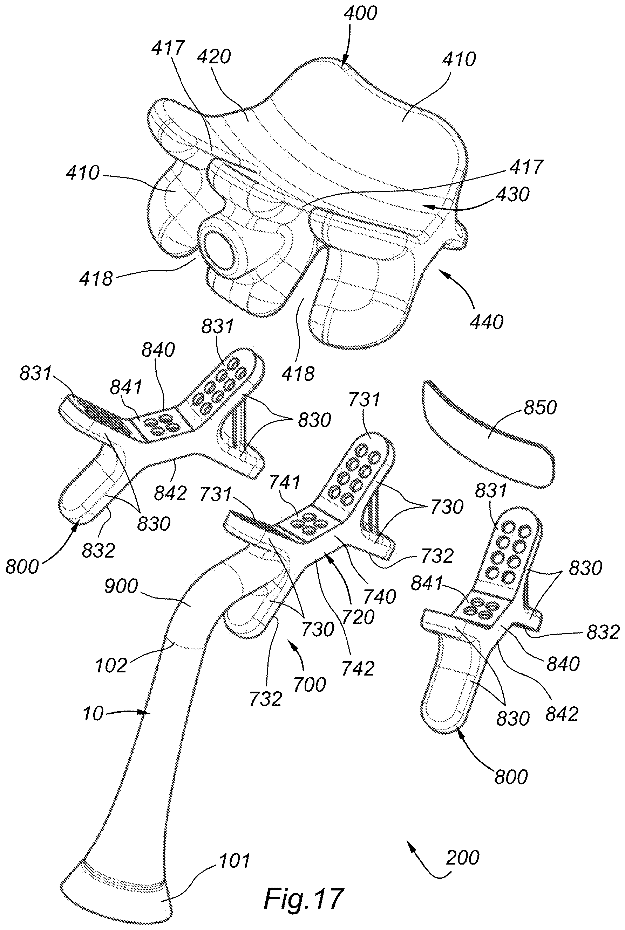

Par ailleurs, la paroi latérale 410 située du côté du manche 3, ou du manchon principal 10 (appelée par la suite paroi latérale proximale 410) présente des encoches 417, 418, visibles sur la figure 17, qui vont contribuer à une meilleure flexibilité du support 400 pour épouser les arcades dentaires en situation. Ces encoches 417, 418 s'étendent sensiblement dans la hauteur de la paroi latérale proximale 410, en partant d'une arête de cette paroi latérale proximale 410 et en s'étendant sensiblement jusqu'à la paroi transversale 420.

Plus précisément, cette paroi latérale proximale 410 présente deux encoches supérieures 417 au niveau de la gorge supérieure 430, et deux encoches inférieures 418 au niveau de la gorge inférieure 440. Par ailleurs, une encoche supérieure 417 et une encoche inférieure 418 sont disposées en alignement d'un côté du plan médian PM, tandis que l'autre encoche supérieure 417 et l'autre encoche inférieure 418 sont disposées en alignement de l'autre côté du plan médian PM.

Ainsi, le support 400 présente une section transversale en forme générale de « H », selon un plan médian PM parallèle à un plan (Y, Z), en considérant la direction transversale Y, la direction longitudinale X et la direction verticale Z telles que décrites précédemment pour la première tête de brossage 2. Ce plan médian PM forme par ailleurs un premier plan de symétrie du support 400.

A la différence du support 4 de la première tête de brossage 2, le support 400 de la seconde tête de brossage 200 ne présente pas une symétrie par rapport à un plan parallèle au plan (X, Z), dans la mesure où l'autre paroi latérale 410 (celle qui est la plus éloignée du manche 3 ou du manchon principal 10, et qui est appelée par la suite paroi latérale distale 41 ne présente pas d'encoches.

Par contre, ce support 400 présente aussi une symétrie par rapport à un plan de symétrie parallèle au plan (X, Y) coplanaire avec la paroi transversale 420.

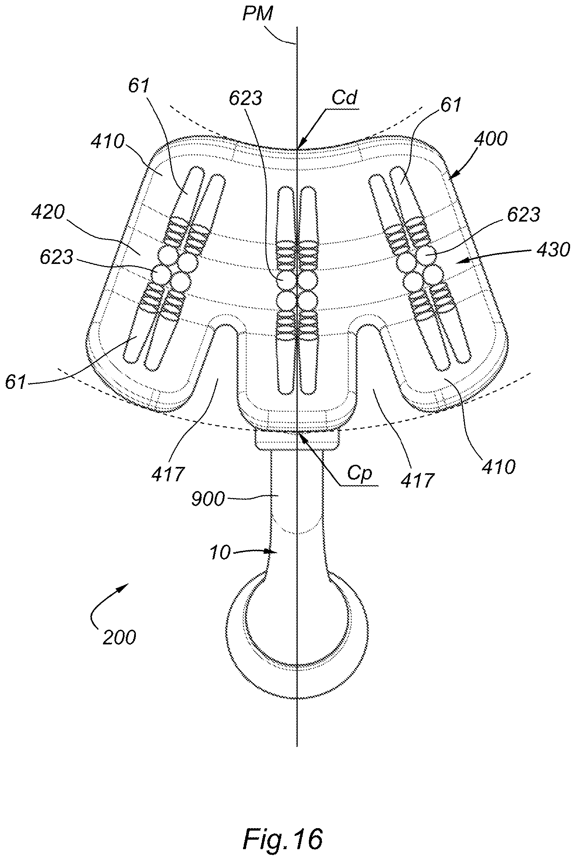

A la différence encore du support 4 de la première tête de brossage 2, les parois latérales 410 du support 400 de la seconde tête de brossage 200 présentent chacune une seconde courbure telle que, dans un plan de coupe parallèle au plan (X, Y) ou à la paroi transversale 420, chaque paroi latérale 410 présente une section incurvée ou arquée. Comme visible sur la figure 16, la paroi latérale proximale 410 présente une courbure Cp, tandis que la paroi latérale distale 41 présente une courbure Cd, où la courbure Cp est inférieure ou égale à la courbure Cd. Ces courbures Cp, Cd des parois latérales 41 contribuent à épouser sensiblement la courbure des arcades dentaires en situation. Ainsi, la gorge supérieure 430 et la gorge inférieure 440 sont des gorges incurvées bordées par des parois latérales 410 incurvées.

La seconde tête de brossage 200 comprend également des éléments de brosses 61, 623, 624 qui sont supportés par le support 400 et qui s'étendent à l'intérieur de la gorge supérieure 430 et de la gorge inférieure 440 pour le brossage conjoint des dents supérieures et des dents inférieures.

Les éléments de brosses 61, 623, 624 comprennent des éléments de brosses latéraux 61 qui sont supportés par les parois latérales 410, et des éléments de brosses transversaux 623, 624 qui sont supportés par la paroi transversale 420. Les éléments de brosses 61, 623, 624 sont fixés solidairement au support 400 comme décrit ci-après, et ne sont donc pas amovibles comme c'est le cas dans la première tête de brossage 2.

Ainsi, on distingue :
- des éléments de brosses latéraux 61 supérieurs qui sont disposés en vis-à-vis, qui s'étendent dans la gorge supérieure 430 et qui sont prévus pour le brossage conjoint des faces interne et externe des dents supérieures ; et
- des éléments de brosses latéraux 61 inférieurs qui sont disposés en vis-à-vis, qui s'étendent dans la gorge inférieure 440 et qui sont prévus pour le brossage conjoint des faces interne et externe des dents inférieures.

Les éléments de brosses latéraux 61 supérieurs comprennent des éléments fixés sur la paroi latérale proximale 410 en vis-à-vis (ou en face) des éléments fixés sur la paroi latérale distale 410. Du fait de la première courbure des parois latérales 410 et donc de leur non parallélisme, ces éléments de brosses latéraux 61 supérieurs présentent une inclinaison relative, mais ils demeurent en vis-à-vis pour le brossage conjoint des faces interne et externe des dents supérieures. Il en est de même des éléments de brosses latéraux 61 inférieurs.

On distingue également :
- des éléments de brosses transversaux supérieurs 623 qui s'étendent dans la gorge supérieure 430 et qui sont prévus pour le brossage conjoint des faces occlusales des dents supérieures ; et
- des éléments de brosses transversaux inférieurs 624 qui s'étendent dans la gorge inférieure 440 et qui sont prévus pour le brossage conjoint des faces occlusales des dents inférieures.

Tout comme la première tête de brossage 2, la seconde tête de brossage 200 comprend en outre un dispositif oscillatoire (non visible intégralement sur les figures 13 à 17) propre à imprimer un mouvement oscillatoire au support 400, et en particulier un mouvement oscillatoire de va-et-vient selon une direction parallèle à la direction transversale Y, où ce dispositif oscillatoire est porté par un manchon principal 10 prévu pour être monté de manière amovible sur l'extrémité supérieure 30 du manche 3.

Ce dispositif oscillatoire comprend :
- une pièce mobile 700 (visible partiellement sur la figure 17) rigide sur laquelle est monté le support 400,
- un arbre d'entraînement (non visible) couplé à la pièce mobile 700 pour entraîner en oscillation la pièce mobile 700 et le support 400 ; et
- un boîtier 900.

Le couplage entre la pièce mobile 700 et l'arbre d'entraînement est similaire ou équivalent à celui de la première tête de brossage 2, et il ne fera donc pas l'objet d'une nouvelle description.

La pièce mobile 700 est une pièce oblongue s'étendant selon une direction longitudinale parallèle à la direction transversale Y et incluse dans le plan médian PM du support 400 et elle présente une partie de montage 720 qui est solidarisé au support 4, à l'intérieur du support 4. Ainsi, cette partie de montage 720 traverse partiellement le support 400 dans sa paroi latérale 420.

Cette pièce mobile 700 présente également une partie d'accouplement (non visible sur la figure 17 car disposée à l'intérieur du boîtier 900) qui est en accouplement avec l'arbre d'entraînement selon un couplage similaire ou équivalent à celui de la première tête de brossage 2.

La pièce mobile 700 est réalisée d'un seul tenant dans un matériau rigide, tel qu'un matériau métallique ou plastique.

La partie de montage 720 présente :
- deux portions d'extrémité 730 opposées qui sont noyées à l'intérieur des parois latérales 410 ; et
- entre les deux portions d'extrémité 730, une portion centrale 740 qui est noyée à l'intérieur de la paroi transversale 420.

Autrement dit, la partie de montage 720 de la pièce mobile 700 est noyée à l'intérieur du support 400, notamment en réalisant un surmoulage du support 400 autour de la partie de montage 720. Ainsi, cette partie de montage 720 de la pièce mobile 700 est solidarisée au support 400, afin de transmettre au support 400 le mouvement oscillatoire généré par l'arbre d'entraînement accouplé à cette pièce mobile 700.

La portion centrale 740 de la partie de montage 720 présente une face supérieure 741 tournée vers la gorge supérieure 430 et une face inférieure 742 opposée tournée vers la gorge inférieure 440, où :
- la face supérieure 741 supporte une brosse (non illustrée sur la figure 17 où seuls les trous de montage des poils de brosse sont visibles sur cette face supérieure 741) qui formera un élément de brosse transversal supérieur 623 ; et de même
- la face inférieure 742 supporte une brosse (non illustrée sur la figure 17) qui formera un élément de brosse transversal inférieur 624.

Dans la mesure où cette portion centrale 740 est noyée dans l'épaisseur de la paroi transversale 420 du support 400, des perçages adéquats seront ménagés dans la paroi transversale 420 pour laisser passer les brosses afin que celles-ci débouchent dans les gorges 430, 440 respectives.

Chaque portion d'extrémité 730 présente une forme arquée ou en « V » afin de définir une face supérieure 731 tournée vers la gorge supérieure 430 et une face inférieure 732 opposée tournée vers la gorge inférieure 440, où :
- la face supérieure 731 supporte une brosse (non illustrée sur la figure 17 où seuls les trous de montage des poils de brosse sont visibles sur cette face supérieure 741) qui formera un élément de brosse latéral 61 supérieur ; et de même
- la face inférieure 732 supporte une brosse (non illustrée sur la figure 17) qui formera un élément de brosse latéral 61 supérieur.

Cette forme arquée ou en « V » des portions d'extrémité 730 est propre à épouser intérieurement la forme du support 400 où les deux parois latérales 410 sont en vis-à-vis et inclinées relativement.

Dans la mesure où chaque portion d'extrémité 730 est noyée dans l'épaisseur d'une paroi latérale 410 du support 400, des perçages adéquats seront ménagés dans les parois latérales 410 pour laisser passer les brosses afin que celles-ci débouchent dans les gorges 430, 440 respectives.

En référence à la figure 17, il est à noter que deux pièces internes 800 sont également noyées à l'intérieur du support 400. Chaque pièce interne 800 est réalisée d'un seul tenant dans un matériau rigide, tel qu'un matériau métallique ou plastique.

Chaque pièce interne 800 présente une forme similaire à la partie de montage 720 de la pièce mobile 700, c'est-à-dire que chaque pièce interne 800 présente :
- deux portions d'extrémité 830 opposées qui sont noyées à l'intérieur des parois latérales 410 ; et
- entre les deux portions d'extrémité 830, une portion centrale 840 qui est noyée à l'intérieur de la paroi transversale 420.

Autrement dit, chaque pièce interne 800 est noyée à l'intérieur du support 400, notamment en réalisant un surmoulage du support 400 autour de chaque pièce interne 800.

Par ailleurs, chaque pièce interne 800 est couplée rigidement à la partie de montage 720 de la pièce mobile 700, notamment au moyen d'un lien rigide 850 fixé à la fois à la partie de montage 720 et aux deux pièces internes 800. Ce lien rigide 850 est également noyé dans le support 400 (notamment par surmoulage) et il assure une transmission du mouvement oscillatoire de la partie de montage 720 vers les deux pièces internes 800.

Par ailleurs, ce lien rigide 850 entre la partie de montage 720 de la pièce mobile 700 et les deux pièces internes 800 est conformé pour autoriser une déformation arquée du support 400 pour prendre une conformation arquée et ainsi épouser les arcades dentaires. Cette flexibilité du lien rigide 850 est réalisée en employant une pièce arquée, réalisée dans un matériau rigide tel qu'un plastique.

Ainsi, chaque pièce interne 800 est solidarisée au support 400 et à la partie de montage 720 de la pièce mobile 700, afin de transmettre au support 400 le mouvement oscillatoire généré par l'arbre d'entraînement accouplé à cette pièce mobile 700.

Les deux pièces internes 800 sont disposées de part et d'autre de la pièce mobile 700, de part et d'autre du plan médian PM. Par ailleurs, les encoches 417, 418 sont prévues entre la partie de montage 720 de la pièce mobile 700 et chacune des deux pièces internes 800.

La portion centrale 840 présente une face supérieure 841 tournée vers la gorge supérieure 430 et une face inférieure 842 opposée tournée vers la gorge inférieure 440, où :
- la face supérieure 841 supporte une brosse (non illustrée sur la figure 17 où seuls les trous de montage des poils de brosse sont visibles sur cette face supérieure 841) qui formera un élément de brosse transversal supérieur 623 ; et de même
- la face inférieure 842 supporte une brosse (non illustrée sur la figure 17) qui formera un élément de brosse transversal inférieur 624.

Dans la mesure où cette portion centrale 840 est noyée dans l'épaisseur de la paroi transversale 420 du support 400, des perçages adéquats seront ménagés dans la paroi transversale 420 pour laisser passer les brosses afin que celles-ci débouchent dans les gorges 430, 440 respectives.

Chaque portion d'extrémité 830 présente une forme arquée ou en « V » afin de définir une face supérieure 831 tournée vers la gorge supérieure 430 et une face inférieure 832 opposée tournée vers la gorge inférieure 440, où :
- la face supérieure 831 supporte une brosse (non illustrée sur la figure 17 où seuls les trous de montage des poils de brosse sont visibles sur cette face supérieure 741) qui formera un élément de brosse latéral 61 supérieur ; et de même
- la face inférieure 832 supporte une brosse (non illustrée sur la figure 17) qui formera un élément de brosse latéral 61 inférieur.

Cette forme arquée ou en « V » des portions d'extrémité 830 est propre à épouser intérieurement la forme du support 400 où les deux parois latérales 410 sont en vis-à-vis et inclinées relativement.

Dans la mesure où chaque portion d'extrémité 830 est noyée dans l'épaisseur d'une paroi latérale 410 du support 400, des perçages adéquats seront ménagés dans les parois latérales 410 pour laisser passer les brosses afin que celles-ci débouchent dans les gorges 430, 440 respectives.

Bien entendu les deux exemples de mise en œuvre évoqués ci-dessus ne présentent aucun caractère limitatif et d'autres améliorations et détails peuvent être apportés à la tête de brossage selon l'invention, sans pour autant sortir du cadre de l'invention où d'autres dispositifs oscillatoire ou d'autres mécanismes propres à imprimer un mouvement oscillatoire au support peuvent par exemple être réalisés.

A titre d'exemple de variante, la pièce mobile 7 et l'arbre d'entraînement 8 peuvent être accouplés en étant colinéaires, ou du moins parallèles, de sorte que le manche 3 sera parallèle à la direction longitudinale de la pièce mobile 7. Dans une telle conformation, le manche 3 sera proche de l'horizontale tout étant inclus dans le plan de symétrie du visage au début du brossage (un peu à la manière d'un cigare tenu en bouche), ce qui a nouveau procure une tenue ergonomique de la brosse à dents.

## Revendications

1. Tête de brossage (2 ; 200) pour brosse à dents électrique (1 ; 100), comprenant :
- un support (4 ; 400) comprenant deux parois latérales (41 ; 410) reliées par une paroi transversale (42 ; 420) qui délimitent, de part et d'autre de la paroi transversale (42 ; 420), une gorge supérieure (43 ; 430) et une gorge inférieure (44; 430), où lesdites parois latérales (41 ; 410) et la paroi transversale (42 ; 420) sont conformées pour supporter, d'une part et à l'intérieur de la gorge supérieure (43 ; 430), des éléments de brosses latéraux (51 ; 61) supérieurs en vis-à-vis et des éléments de brosses transversaux supérieurs (523 ; 623) et, d'autre part et à l'intérieur de la gorge inférieure (44; 440), des éléments de brosses latéraux (51, 61) inférieurs disposés en vis-à-vis et des éléments de brosses transversaux inférieurs (524 ; 624) ; et
- un dispositif oscillatoire (6) propre à imprimer un mouvement oscillatoire audit support (4 ; 440) ;
où le support (4 ; 400) est élastiquement déformable pour autoriser une déformation arquée, et présente un plan médian (PM) coupant les deux parois latérales (41 ; 410) et la paroi transversale (42 ; 420) de sorte que le support (4 ; 400) soit conformé pour supporter des éléments de brosses latéraux (51 ; 61) supérieurs, des éléments de brosses transversaux supérieurs (523 ; 623), des éléments de brosses latéraux (51 ; 61) inférieurs et des éléments de brosses transversaux inférieurs (524 ; 624) de part et d'autre dudit plan médian (PM) ;
et où ledit dispositif oscillatoire (6) comprend une pièce mobile (7 ; 700) sur laquelle est monté le support (4 ; 400), et un arbre d'entraînement (8) couplé à ladite pièce mobile (7 ; 700) pour entraîner en oscillation la pièce mobile (7 ; 700) et le support (4 ; 400) selon un mouvement oscillatoire comprenant au moins une composante de va-et-vient en translation selon une direction orthogonale audit plan médian (PM), où la pièce mobile (7) présente une partie d'accouplement (71) accouplée à l'arbre d'entraînement (8) via des éléments de couplage (710 ; 82) formant des moyens de conversion d'une rotation de l'arbre d'entraînement (8) en une oscillation de va-et-vient de la pièce mobile (7 ; 700) et du support (4 ; 400), et où ladite pièce mobile (7 ; 700) et l'arbre d'entraînement s'étendent substantiellement dans le plan médian (PM) du support (4).

2. Tête de brossage (2 ; 200) selon la revendication 1, dans laquelle le support (4 ; 400) est élastiquement déformable en étant réalisé au moins partiellement dans un matériau flexible élastiquement déformable, et par exemple en étant réalisé intégralement dans un matériau flexible élastiquement déformable.

3. Tête de brossage (2 ; 200) selon l'une quelconque des revendications précédentes, dans laquelle au moins une des parois latérales (41 ; 410) du support (4) présente au moins une saignée (416) formant une amorce de pliage ou au moins un encoche (417 ; 418) pour favoriser une déformation arquée.

4. Tête de brossage (2) selon l'une quelconque des revendications précédentes, dans laquelle la paroi transversale (42) présente des fenêtres (421, 422) traversantes conformées pour recevoir des éléments de brosses transversaux (52) présentant des brosses supérieures (523) formant les éléments de brosses transversaux supérieurs, et des brosses inférieures (524) opposées formant les éléments de brosses transversaux inférieurs.

5. Tête de brossage (2) selon l'une quelconque des revendications précédentes, dans laquelle l'une au moins des parois latérales (41) et de la paroi transversale (42) présente des fenêtres (411, 412, 413, 414, 422) traversantes conformées pour recevoir par emboîtement des éléments de brosses (51, 52), chaque fenêtre (411 ; 412; 413; 414; 422) présentant une bordure interne dans laquelle est prévu au moins un tenon saillant, ou inversement au moins une rainure, de sorte que chaque élément de brosse (51 ; 52) peut être emboîté dans une fenêtre par une coopération d'un tenon dans une rainure.

6. Tête de brossage (2 ; 200) selon l'une quelconque des revendications précédentes, dans laquelle la pièce mobile (7 ; 700) du dispositif oscillatoire (6) est une pièce rigide.

7. Tête de brossage (2 ; 200) selon l'une quelconque des revendications précédentes, dans laquelle la pièce mobile (7 ; 700) du dispositif oscillatoire (6) s'étend au niveau de la paroi transversale (42 ; 420) du support (4 ; 400).

8. Tête de brossage (2 ; 200) selon l'une quelconque des revendications précédentes, dans laquelle la pièce mobile (7 ; 700) du dispositif oscillatoire (6) présente une partie de montage (70 ; 720) qui traverse le support (4) dans sa paroi latérale (42), ladite partie de montage (70 ; 720) présentant une portion centrale (702 ; 740) s'étendant dans la paroi latérale (42 ; 420) et qui présente une face supérieure (703 ; 741) tournée vers la gorge supérieure (43 ; 430) et une face inférieure (704 ; 741) tournée vers la gorge inférieure (44).

9. Tête de brossage (2 ; 200) selon la revendication précédente, dans laquelle la face supérieure (703 ; 741) et la face inférieure (704 ; 742) de la portion centrale (702 ; 740) de la partie de montage (70 ; 720) de la pièce mobile (7 ; 700) supportent des brosses formant respectivement un élément de brosse transversal supérieur (523 ; 623) et un élément de brosse transversal inférieurs (524 ; 624).

10. Tête de brossage (2) selon l'une quelconque des revendications précédentes, dans laquelle les éléments de couplage comprennent une fente oblongue (710) ménagée dans la partie d'accouplement (71), et une came excentrée (82) prévue sur une extrémité supérieure (81) de l'arbre d'entraînement (8), avec la came excentrée (82) qui est engagée dans ladite fente oblongue (710), de manière à ce qu'une rotation de l'arbre d'entraînement (8) soit convertie en une oscillation de va-et-vient de la pièce mobile (7) et du support (4).

11. Tête de brossage (2) selon l'une quelconque des revendications précédentes, dans laquelle la partie d'accouplement (71) est enchâssée dans un boîtier (9) dans lequel sont prévus deux trous de guidage (93) opposés, et la partie d'accouplement (71) comprend deux doigts de guidage (711) engagés dans lesdits trous de guidage (93).

12. Tête de brossage (2 ; 200) selon l'une quelconque des revendications précédentes, comprenant en outre des éléments de brosses latéraux (51 ; 61) supérieurs et des éléments de brosses latéraux (51 ; 61) inférieurs supportés par les parois latérales (41 ; 410) du support (4 ; 400), ainsi que des éléments de brosses transversaux supérieurs (523 ; 623) et des éléments de brosses transversaux inférieurs (524 ; 624) supportés par la paroi transversale (42 ; 420) du support (4 ; 400).

13. Tête de brossage (2 ; 200) selon l'une quelconque des revendications précédentes, comprenant en outre un manchon principal (10) entourant au moins partiellement l'arbre d'entraînement (8) et sur lequel est montée la pièce mobile (7 ; 700), ledit manchon principal (10) étant prévu pour être monté de manière amovible sur un manche (3) logeant un moteur électrique couplé à un arbre de sortie propre à un accouplement avec l'arbre d'entraînement (8).

14. Brosse à dents électrique (1 ; 100), comprenant un manche (3) logeant un moteur électrique couplé à un arbre de sortie, et une tête de brossage (2 ; 200) conforme à la revendication précédente, où l'arbre d'entraînement (8) du dispositif oscillatoire (6) de la tête de brossage (2 ; 200) est couplé, d'une part, à la pièce mobile (7 ; 700) pour entraîner en oscillation la pièce mobile (7 ; 700) et le support (4 ; 400) et, d'autre part, à l'arbre de sortie, et où le dispositif oscillatoire (6) est porté par le manchon principal (10) monté de manière amovible sur une extrémité supérieure (30) du manche (3).

## Patentansprüche

1. Bürstenkopf (2; 200) für elektrische Zahnbürste (1; 100), umfassend:
- einen Halter (4; 400), der zwei Seitenwände (41; 410) umfasst, die durch eine transversale Wand (42; 420) verbunden sind, die beiderseits der transversalen Wand (42; 420) eine obere Nut (43; 430) und eine untere Nut (44; 430) begrenzen, wobei die Seitenwände (41; 410) und die transversale Wand (42; 420) ausgebildet sind, um einerseits und innerhalb der oberen Nut (43; 430) gegenüberliegende obere seitliche Bürstenelemente (51; 61) und obere transversale Bürstenelemente (523; 623) und andererseits und innerhalb der unteren Nut (44; 440) untere, gegenüberliegend angeordnete seitliche Bürstenelemente (51, 61) und untere transversale Bürstenelemente (524; 624) zu halten; und
- eine Schwingvorrichtung (6), die imstande ist, den Halter (4; 440) in eine schwingende Bewegung zu versetzen;
wobei der Halter (4; 400) elastisch verformbar ist, um eine gebogene Verformung zu gestatten und eine Mittelebene (PM) aufweist, die die zwei Seitenwände (41; 410) und die transversale Wand (42; 420) derart schneidet, dass der Halter (4; 400) ausgebildet ist, um obere seitliche Bürstenelemente (51; 61), obere transversale Bürstenelemente (523; 623), untere seitliche Bürstenelemente (51; 61) und untere transversale Bürstenelemente (524; 624) beiderseits der Mittelebene (PM) zu halten;
und wobei die Schwingvorrichtung (6) ein bewegliches Teil (7; 700) umfasst, auf dem der Halter (4; 400) angebracht ist, und eine Antriebswelle (8), die an das bewegliche Teil (7; 700) gekoppelt ist, um das bewegliche Teil (7; 700) schwingend und den Halter (4; 400) gemäß einer schwingenden Bewegung anzutreiben, die mindestens eine translatorische Hin- und Her-Komponente gemäß einer zu der Mittelebene (PM) orthogonalen Richtung umfasst, wobei das bewegliche Teil (7) einen Kopplungsteil (71) aufweist, der an die Antriebswelle (8) über Kopplungselemente (710; 82) gekoppelt ist, die Mittel zur Umwandlung einer Rotation der Antriebswelle (8) in eine Hin- und Her-Schwingung des beweglichen Teils (7; 700) und des Halters (4; 400) bilden, und wobei sich das bewegliche Teil (7; 700) und die Antriebswelle substantiell in der Mittelebene (PM) des Halters (4) erstrecken.

2. Bürstenkopf (2; 200) nach Anspruch 1, wobei der Halter (4; 400) elastisch verformbar ist, indem er mindestens teilweise aus einem flexiblen, elastisch verformbaren Material hergestellt ist und indem er beispielsweise vollständig aus einem flexiblen, elastisch verformbaren Material hergestellt ist.

3. Bürstenkopf (2; 200) nach einem der vorangehenden Ansprüche, wobei mindestens eine der Seitenwände (41; 410) des Halters (4) mindestens eine Rinne (416) aufweist, die den Ausgangspunkt einer Verbiegung oder mindestens eine Kerbe (417; 418) bildet, um eine gebogene Verformung zu fördern.

4. Bürstenkopf (2) nach einem der vorangehenden Ansprüche, wobei die transversale Wand (42) Durchgangsfenster (421, 422) aufweist, die ausgebildet sind, um transversale Bürstenelemente (52) aufzunehmen, die obere Bürsten (523) aufweisen, die die oberen transversalen Bürstenelemente bilden, und gegenüberliegende untere Bürsten (524), die die unteren transversalen Bürstenelemente bilden.

5. Bürstenkopf (2) nach einem der vorangehenden Ansprüche, wobei mindestens eine von den Seitenwänden (41) und von der transversalen Wand (42) Durchgangsfenster (411, 412, 413, 414, 422) aufweist, die ausgebildet sind, um durch Einpassen Bürstenelemente (51, 52) aufzunehmen, wobei jedes Fenster (411; 412; 413; 414; 422) einen inneren Rand aufweist, in dem mindestens ein hervorstehender Zapfen oder umgekehrt mindestens eine Rille vorgesehen ist, so dass jedes Bürstenelement (51; 52) in ein Fenster durch Zusammenwirken eines Zapfens in einer Rille eingepasst werden kann.

6. Bürstenkopf (2; 200) nach einem der vorangehenden Ansprüche, wobei das bewegliche Teil (7; 700) der Schwingvorrichtung (6) ein starres Teil ist.

7. Bürstenkopf (2; 200) nach einem der vorangehenden Ansprüche, wobei sich das bewegliche Teil (7; 700) der Schwingvorrichtung (6) im Bereich der transversalen Wand (42; 420) des Halters (4; 400) erstreckt.

8. Bürstenkopf (2; 200) nach einem der vorangehenden Ansprüche, wobei das bewegliche Teil (7; 700) der Schwingvorrichtung (6) einen Montageteil (70; 720) aufweist, der den Halter (4) in seiner Seitenwand (42) durchquert, wobei der Montageteil (70; 720) einen zentralen Abschnitt (702; 740) aufweist, der sich in der Seitenwand (42; 420) erstreckt und der eine obere Fläche (703; 741) aufweist, die zur oberen Nut (43; 430) zeigt, und eine untere Fläche (704; 741), die zur unteren Nut (44) zeigt.

9. Bürstenkopf (2; 200) nach vorangehendem Anspruch, wobei die obere Fläche (703; 741) und die untere Fläche (704; 742) des zentralen Abschnitts (702; 740) des Montageteils (70; 720) des beweglichen Teils (7; 700) Bürsten halten, die jeweils ein oberes transversales Bürstenelement (523; 623) und ein unteres transversales Bürstenelement (524; 624) bilden.

10. Bürstenkopf (2) nach vorangehendem Anspruch, wobei die Kopplungselemente einen länglichen Schlitz (710) umfassen, der im Kopplungsteil (71) eingearbeitet ist, und einen versetzten Nocken (82), der auf einem oberen Ende (81) der Antriebswelle (8) vorgesehen ist, mit dem versetzten Nocken (82), der in den länglichen Schlitz (710) derart eingreift, dass eine Rotation der Antriebswelle (8) in eine Hin- und Her-Schwingung des beweglichen Teils (7) und des Halters (4) umgewandelt wird.

11. Bürstenkopf (2) nach einem der vorangehenden Ansprüche, wobei der Kopplungsteil (71) in ein Gehäuse (9) eingelassen ist, in dem zwei gegenüberliegende Führungslöcher (93) vorgesehen sind, und der Kopplungsteil (71) zwei Führungsfinger (711) umfasst, die in die Führungslöcher (93) eingesetzt sind.

12. Bürstenkopf (2; 200) nach einem der vorangehenden Ansprüche, umfassend ferner obere seitliche Bürstenelemente (51; 61) und untere seitliche Bürstenelemente (51; 61), die von den Seitenwänden (41; 410) des Halters (4; 400) gehalten werden, sowie obere transversale Bürstenelemente (523; 623) und untere transversale Bürstenelemente (524; 624), die von der transversalen Wand (42; 420) des Halters (4; 400) gehalten werden.

13. Bürstenkopf (2; 200) nach einem der vorangehenden Ansprüche, umfassend ferner eine Hauptmuffe (10), die die Antriebswelle (8) mindestens teilweise umgibt und auf der das bewegliche Teil (7; 700) angebracht ist, wobei die Hauptmuffe (10) zur lösbaren Anbringung auf einem Griff (3) vorgesehen ist, in dem ein Elektromotor untergebracht ist, der mit einer Ausgangswelle gekoppelt ist, die imstande ist, mit der Antriebswelle (8) gekoppelt zu sein.

14. Elektrische Zahnbürste (1; 100), umfassend einen Griff (3), in dem ein Elektromotor untergebracht ist, der mit einer Ausgangswelle gekoppelt ist, und einen Bürstenkopf (2; 200) nach vorangehendem Anspruch, wobei die Antriebswelle (8) der Schwingvorrichtung (6) des Bürstenkopfs (2; 200) zum einen an das bewegliche Teil (7; 700) gekoppelt ist, um das bewegliche Teil (7; 700) und den Halter (4; 400) schwingend anzutreiben, und zum anderen an die Ausgangswelle, und wobei die Schwingvorrichtung (6) von der Hauptmuffe (10) getragen wird, die auf einem oberen Ende (30) des Griffs (3) lösbar angebracht ist.

## Claims

1. A brush head (2; 200) for an electric toothbrush (1; 100), comprising:
- a support (4; 400) comprising two lateral walls (41; 410) connected by a transverse wall (42; 420) which delimit, on either side of the transverse wall (42; 420), an upper groove (43; 430) and a lower groove (44; 430), wherein said lateral walls (41; 410) and the transverse wall (42; 420) are shaped so as to support, on the one hand and inside the upper groove (43; 430), upper lateral brush elements (51; 61) opposite each other and upper transverse brush elements (523; 623) and, on the other hand and inside the lower groove (44; 440), lower lateral brush elements (51, 61) disposed opposite each other and lower transverse brush elements (524; 624); and
- an oscillatory device (6) adapted to impart an oscillatory movement to said support (4; 440);
wherein the support (4; 400) is elastically deformable so as to enable an arcuate deformation, and has a midplane (PM) intersecting the two lateral walls (41; 410) and the transverse wall (42; 420) such that the support (4; 400) is shaped so as to support upper lateral brush elements (51; 61), upper transverse brush elements (523; 623), lower lateral brush elements (51; 61), and lower transverse brush elements (524; 624) on either side of said midplane (PM);
and wherein said oscillatory device (6) comprises a movable part (7; 700) on which the support (4; 400) is mounted, and a drive shaft (8) coupled to said movable part (7; 700) to drive in oscillation the movable part (7; 700) and the support (4; 400) according to an oscillatory movement comprising at least one reciprocating component in translation along a direction orthogonal to said midplane (PM), wherein the movable part (7) has a coupling portion (71) coupled to the drive shaft (8) via coupling elements (710; 82) forming means for converting a rotation of the drive shaft (8) into a reciprocating oscillation of the movable part (7; 700) and the support (4; 400), and wherein said movable part (7; 700) and the drive shaft extend substantially in the midplane (PM) of the support (4).

2. The brush head (2; 200) according to claim 1, wherein the support (4; 400) is elastically deformable by being made at least partially of an elastically deformable flexible material, and for example by being integrally made of an elastically deformable flexible material.

3. The brush head (2; 200) according to any one of the preceding claims, wherein at least one of the lateral walls (41; 410) of the support (4) has at least one furrow (416) forming a folding primer or at least one notch (417; 418) to promote an arcuate deformation.

4. The brush head (2) according to any one of the preceding claims, wherein the transverse wall (42) has through apertures (421, 422) shaped so as to receive transverse brush elements (52) having upper brushes (523) forming the upper transverse brush elements, and opposite lower brushes (524) forming the lower transverse brush elements.

5. The brush head (2) according to any one of the preceding claims, wherein at least one amongst the lateral walls (41) and the transverse wall (42) has through apertures (411, 412, 413, 414, 422) shaped so as to receive by nesting brush elements (51, 52), each aperture (411; 412; 413; 414; 422) having an inner border in which at least one protruding lug, or conversely at least one slot, is provided such that each brush element (51; 52) can be nested into an aperture by a cooperation of a lug in a slot.

6. The brush head (2; 200) according to any one of the preceding claims, wherein the movable part (7; 700) of the oscillatory device (6) is a rigid part.

7. The brush head (2; 200) according to any one of the preceding claims, wherein the movable part (7; 700) of the oscillatory device (6) extends at the level of the transverse wall (42; 420) of the support (4; 400).

8. The brush head (2; 200) according to any one of the preceding claims, wherein the movable part (7; 700) of the oscillatory device (6) has a mounting portion (70; 720) which passes through the support (4) in its lateral wall (42), said mounting portion (70; 720) having a central portion (702; 740) extending in the lateral wall (42; 420) and which has an upper face (703; 741) facing the upper groove (43; 430) and a lower face (704; 741) facing the lower groove (44).

9. The brush head (2; 200) according to the preceding claim, wherein the upper face (703; 741) and the lower face (704; 742) of the central portion (702; 740) of the mounting portion (70; 720) of the movable part (7; 700) support brushes forming respectively an upper transverse brush element (523; 623) and a lower transverse brush element (524; 624).

10. The brush head (2) according to any one of the preceding claims, wherein the coupling elements comprise an oblong slit (710) formed in the coupling portion (71), and an eccentric cam (82) provided on an upper end (81) of the drive shaft (8), with the eccentric cam (82) which is engaged into said oblong slit (710), so that a rotation of the drive shaft (8) is converted into a reciprocating oscillation of the movable part (7) and the support (4).

11. The brush head (2) according to any one of the preceding claims, wherein the coupling portion (71) is fitted in a case (9) in which two opposite guide holes (93) are provided, and the coupling portion (71) comprises two guide pins (711) engaged into said guide holes (93).

12. The brush head (2; 200) according to any one of the preceding claims, further comprising upper lateral brush elements (51; 61) and lower lateral brush elements (51; 61) supported by the lateral walls (41; 410) of the support (4; 400), as well as upper transverse brush elements (523; 623) and lower transverse brush elements (524; 624) supported by the transverse wall (42, 420) of the support (4; 400).

13. The brush head (2; 200) according to any one of the preceding claims, further comprising a main sleeve (10) surrounding at least partially the drive shaft (8) and on which the movable part (7; 700) is mounted, said main sleeve (10) being intended to be removably mounted on a handle (3) housing an electric motor coupled to an output shaft adapted for coupling with the drive shaft (8).

14. An electric toothbrush (1; 100), comprising a handle (3) housing an electric motor coupled to an output shaft, and a brush head (2; 200) in accordance with the preceding claim, wherein the drive shaft (8) of the oscillatory device (6) of the brush head (2; 200) is coupled, on the one hand, to the movable part (7; 700) to drive in oscillation the movable part (7; 700) and the support (4; 400) and, on the other hand, to the output shaft, and wherein the oscillatory device (6) is carried by the main sleeve (10) removably mounted on an upper end (30) of the handle (3).
